# EUROPÄISCHE PATENTSCHRIFT

(11) **EP 3 668 710 B1**
(45) Veröffentlichungstag und Bekanntmachung des Hinweises auf die Patenterteilung: **26.01.2022**
(21) Anmeldenummer: 19782935.1
(22) Anmeldetag: 25.09.2019
(51) Int. Cl.: B32B 5/02, B32B 5/18, B32B 5/24, B32B 7/12, B32B 27/12, B32B 27/36, B32B 27/40, D01D 5/34, D04H 1/541

(54) **VERBUNDFOLIE**
COMPOSITE FILM
FEUILLE COMPOSITE

(30) Priorität: 31.10.2018 DE 102018008585
(43) Veröffentlichungstag der Anmeldung: 24.06.2020
(73) Patentinhaber: Ewald Dörken AG, 58313 Herdecke (DE)
(72) Erfinder: BACHON, Thomas, 40597 Düsseldorf (DE)
(74) Vertreter: Weidener, Jörg Michael
(86) Internationale Anmeldenummer: PCT/EP2019/075844
(87) Internationale Veröffentlichungsnummer: WO 2020/088853

(56) Entgegenhaltungen:
- EP-A1- 2 826 896
- WO-A1-2017/079209
- WO-A2-97/30244

## Beschreibung

Die Erfindung betrifft eine Verbundfolie, vorzugsweise vorgesehen für den Einsatz in der Bauwirtschaft und/oder vorzugsweise zur Verwendung als Baufolie. Die Verbundfolie weist wenigstens eine Funktionsschicht auf. Zudem weist die Verbundfolie wenigstens eine äußere Schutzschicht und wenigstens eine innere Schutzschicht auf. Die Funktionsschicht ist zwischen der äußeren Schutzschicht und der inneren Schutzschicht angeordnet.

Die äußere Schutzschicht kann im verlegten Zustand der Witterungsseite zugewandt sein. Gerade bei einem Einsatz im Freien ergibt sich eine Witterungsseite und zwar diejenige Seite, die der Witterung zugewandt ist und somit den aus der Witterung resultierenden Beanspruchungen ausgesetzt ist. Grundsätzlich ist auch ein Einsatz der Verbundfolie in geschlossenen, vor der Witterung geschützten Bereichen denkbar.

Verbundfolien, die im Bereich der Bauwirtschaft eingesetzt werden, dienen zum Schutz von Gebäuden, Baumaterialien und/oder zur Abdeckung, insbesondere von Gebäuden. Insbesondere können Verbundfolien als Fassadenbahnen, Baufolien und/oder Dachbahnen eingesetzt werden.

Erfindungsgemäß kann die Verbundfolie jedoch auch in weiteren Bereichen, beispielsweise in der Landwirtschaft, als Geotextil und/oder im Bereich der Verpackungsindustrie, eingesetzt werden.

Letztlich kann die Verbundfolie zum Werterhalt von Gütern, insbesondere Gebäuden und/oder Baumaterialien, dienen. Beispielsweise kann die Verbundfolie zum Schutz vor der Witterung, insbesondere zum Schutz vor Regen, Schnee, Feuchtigkeit, Kälte, Wärme und/oder Wind, eingesetzt werden. Folglich kann die Verbundfolie auch als Schutzfolie bezeichnet werden.

Aus der Praxis sind verschiedene Verbundfolien bekannt, die einen Mehrschichtaufbau bzw. einen Aufbau aus mehreren Lagen aufweisen. Diese Folien sind jedoch mit einer Reihe von Nachteilen behaftet. So gelingt es den in der Praxis bekannten mehrlagigen Verbundfolien nicht, bei einer hohen Wasserdampfdurchlässigkeit - also bei einem S_{d}-Wert von kleiner als 0,1 m - die für den jeweiligen Einsatzzweck benötigten mechanischen Eigenschaften unter Gewährleistung einer guten Verbindung der einzelnen Lagen untereinander bereitzustellen.

Die in der Praxis bekannte Funktionsschicht stellt die Wasserdichtigkeit, die Wasserdampfdurchlässigkeit und/oder die Winddichtigkeit für die Verbundfolie sicher. Die außenseitigen Schutzschichten dienen zum Schutz der Funktionsschicht, insbesondere bei mechanischer Beanspruchung. Jedoch kann dieser Schutz zumeist nicht für einen längeren Zeitraum, insbesondere für über 10 Jahre, bei Erhaltung einer hohen mechanischen Stabilität der Schutzschichten sichergestellt werden. Darüber hinaus sind gut mit weiteren Lagen der Verbundfolie verbindbare Schutzschichten mit hohen Herstellungskosten verbunden.

Die WO 97/30244 A2 betrifft eine Bedachungsbahn, die hydrophob ist und/oder ein hydrophobes Finish aufweist.

Die WO 2017/079209 A1 betrifft einen Mehrschichtfilm, der eine mikroporöse und atmungsaktive Kernschicht umfasst.

Die EP 2 826 896 A1 betrifft eine Bikomponentenfaser mit einer ersten Komponente und einer zweiten Komponente, wobei die erste Komponente ein erstes Polymer und die zweite Komponente ein zweites Polymer als Bestandteil aufweist.

Aufgabe der vorliegenden Erfindung ist es nun, die vorgenannten Nachteile des Standes der Technik zu vermeiden.

Erfindungsgemäß wird die vorgenannte Aufgabe bei einer Verbundfolie der eingangs genannten Art dadurch gelöst, dass die Funktionsschicht als wenigstens einlagige Membranschicht ausgebildet ist, dass die äußere Schutzschicht als eine Polyolefin aufweisende Vliesschicht und die innere Schutzschicht als eine Polyester aufweisende Vliesschicht ausgebildet ist.

Unter der äußeren Schutzschicht kann diejenige Schutzschicht verstanden werden, die der Witterungsseite zugewandt ist - sofern die Verbundfolie zum Schutz vor der Witterung eingesetzt wird. Grundsätzlich ist es auch denkbar, dass die Verbundfolie nicht zum Witterungsschutz eingesetzt wird. In diesem Fall wäre die Anordnung der äußeren Schutzschicht und der inneren Schutzschicht vertauschbar. Insbesondere ist die innere Schutzschicht aber dem zu schützenden Gut, beispielsweise dem Gebäudeinneren, dem Baumaterial oder dergleichen, zugewandt.

Erfindungsgemäß weist die Verbundfolie eine sehr gute Witterungsstabilität auf - bei gleichzeitig hoher UV-Stabilität. So kann die Verbundfolie für einen längeren Zeitraum eingesetzt werden, wobei sie über diesen Zeitraum zumindest im Wesentlichen die benötigten Witterungseigenschaften gewährleisten kann. Insbesondere hat die Verbundfolie Standzeiten von länger als 10 Jahre, vorzugsweise zwischen 15 bis 60 Jahre.

Das polyolefinische Material der äußeren Schutzschicht ermöglicht insbesondere die zuvor beschriebene sehr gute Witterungsstabilität. Vorzugweise ist als Polyolefin für die äußere Schutzschicht Polypropylen (PP) vorgesehen.

Darüber hinaus kann durch die Polyester aufweisende innere Schutzschicht eine hohe Festigkeit, Stabilität und/oder Reißfestigkeit sichergestellt werden. Als Polyester wird bevorzugt Polyethylentherephthalat (PET) vorgesehen. PET ist im Vergleich zu PP und/oder Polyolefin härter und/oder steifer und/oder weniger flexibel, weich und/oder elastisch. Insbesondere können erfindungsgemäß die vorteilhaften Witterungseigenschaften einer polyolefinischen Schutzschicht mit der sehr guten mechanischen Stabilität einer Polyester, insbesondere PET, aufweisenden Schutzschicht kombiniert werden, wodurch sich ein synergistischer Effekt beim Einsatz der Verbundfolie ergibt.

Durch die erfindungsgemäße Kombination der sich voneinander unterscheidenden Schutzschichten kann eine gut einstellbare Haptik gewährleistet werden, wodurch die Verlegung der Verbundfolien vereinfacht werden kann.

Des Weiteren hat sich erfindungsgemäß gezeigt, dass die Verarbeitung sowie die Herstellung der Verbundfolie durch den erfindungsgemäßen Aufbau verbessert werden kann. Insbesondere wird eine verbesserte Haftung der Funktionsschicht zu den Schutzschichten ermöglicht.

Grundsätzlich ist es möglich, dass die Vliesschichten neben Polyester bzw. Polyolefin weitere Materien aufweisen.

Die Oberseite der Verbundfolie und/oder die äußere Schutzschicht ist bevorzugt verfestigt, insbesondere wobei die Festigkeit im Vergleich zu aus dem Stand der Technik bekannten Vliesschichten um bis zu 20 % erhöht ist. Besonders bevorzugt weist die äußere Schutzschicht eine hohe Widerstandsfähigkeit gegenüber mechanischen Belastungen, beispielsweise bei der Verwendung der Verbundfolie als Dachbahn, insbesondere bei der Begehung durch einen Dachdecker, auf. Alternativ oder zusätzlich kann erfindungsgemäß die Fusselbildung bzw. die Neigung zur Fusselbildung und/oder gegebenenfalls das Auftreten von Rissen und/oder Löchern der äußeren Schutzschicht und/oder der Verbundfolie, insbesondere bei mechanischer Beanspruchung, sehr gering sein. Hierbei ist die sehr gute Abriebsbeständigkeit von dem Material der inneren Schutzschicht - Polyester, insbesondere PET, - von besonderem Vorteil.

Vorzugsweise kann aufgrund der erfindungsgemäßen Verwendung der Polyester aufweisenden inneren Schutzschicht eine Funktionsschicht mit hoher Wasseraufnahme, insbesondere somit bei hoher Wasserdampfdurchlässigkeit, genutzt werden. Dabei kann die Verbundhaftung zwischen der Funktionsschicht und der inneren Schutzschicht gegenüber unterschiedlichen klimatischen Bedingungen robust und/oder widerstandsfähig sein.

Von besonderen Vorteil ist es, dass kleinere Beschädigungen an der Oberseite der Verbundfolie auf der äußeren Schutzschicht zumindest im Wesentlichen keinen Einfluss auf die Festigkeit und/oder Durchsturzfestigkeit bzw. Reißfestigkeit der gesamten Verbundfolie haben, insbesondere wobei die Festigkeit der Verbundfolie durch die innere Schutzschicht gestützt wird.

Erfindungsgemäß ist vorgesehen, dass die Funktionsschicht als monolithische Membranschicht ausgebildet ist. Unter einer monolithischen Membranschicht wird insbesondere eine geschlossenzellige und/oder porenfreie Schicht einer Membran verstanden. Monolithische Membranschichten können insbesondere einen besonders guten Schutz gegen Schlagregen bei gleichzeitiger Diffusionsoffenheit gewährleisten. Anders als bei der herkömmlichen mikroporösen Membranschicht kann der Feuchtetransport aktiv entlang der Molekülketten durch Diffusion stattfinden.

Des Weiteren wird unter einer Membranschicht eine derartige Schicht verstanden, die eine selektive Durchlässigkeit aufweist. Membranen können grundsätzlich unterschiedlich beschaffen und insbesondere als Folien oder Textilien ausgebildet sein. Membranschichten stellen beispielsweise beim Einsatz als bzw. in einer Unterdachbahn sicher, dass die äußeren Einflüsse der Witterung keinen schädlichen Einfluss für das Gebäudeinnere bewirken.

Erfindungsgemäß weist die Funktionsschicht als Material Kunststoff und/oder Kunstharz auf und/oder besteht daraus. Des Weiteren ist ein elastomeres und/oder ein thermoplastisches Material als Material für die Funktionsschicht vorgesehen, nämlich Polyurethankunststoff, nämlich thermoplastisches Polyurethan (TPU). Bevorzugt besteht die Funktionsschicht aus thermoplastischem Polyurethan. Eine TPU-Folie weist eine hohe mechanische Stabilität auf und ist insbesondere zumindest im Wesentlichen beständig gegen Witterungs- und/oder Umwelteinflüsse.

Insbesondere ist als Material der Funktionsschicht thermoplastisches Polyurethan mit einer hohen Wasseraufnahme vorgesehen, insbesondere wobei eine verbesserte Verbundhaftung zwischen dem PET aufweisender innerer Schutzschicht und dem TPU der Funktionsschicht erreicht wird.

Bei einer weiteren bevorzugten Ausführungsform ist vorgesehen, dass das Material der Funktionsschicht, insbesondere das thermoplastische Polyurethan, einen Anteil von wenigstens 10 %, bevorzugt von 15% bis 100 %, weiter bevorzugt von 20 % bis 70 %, an aus nachwachsenden Rohstoffen stammenden Material aufweist. Als nachwachsende Rohstoffe (NawaRo bzw. NR) sind insbesondere organische Rohstoffe zu verstehen, die aus land- und forstwirtschaftlicher Produktion stammen und vom Menschen zielgerichtet für weiterführende Anwendungszwecke außerhalb des Nahrungs- und Futterbereiches verwendet werden.

Darüber hinaus kann die Funktionsschicht eine Grammatur bzw. ein Flächengewicht von kleiner als 100 g/m² aufweisen. Insbesondere liegt das Flächengewicht zwischen 1 g/m² bis 70 g/m², weiter bevorzugt zwischen 3 g/m² bis 40 g/m². Besonders bevorzugt liegt das Flächengewicht der Funktionsschicht zwischen 4 g/m² bis 30 g/m² und insbesondere zwischen 5 g/m² bis 25 g/m².

Bei einer weiteren besonders bevorzugten Ausführungsform des Erfindungsgedankens ist vorgesehen, dass die Funktionsschicht wenigstens zwei Lagen von Membranschichten aufweist. Diese Membranschichtlagen können einerseits unterschiedlich ausgebildet sein. Zudem können andererseits wenigstens zwei Membranschichtlagen zumindest im Wesentlichen identisch ausgebildet sein. Insbesondere kann bei einem dreilagigen Aufbau der Funktionsschicht vorgesehen sein, dass die äußeren Lagen, die eine mittige Lage einfassen, zumindest im Wesentlichen identisch ausgebildet sind. Unter einer identischen Ausbildung ist insbesondere zu verstehen, dass die Membranschichtlagen gleiche Oberflächeneigenschaften und/oder das gleiche Material und/oder die gleiche Materialzusammensetzung aufweisen. Letztlich können die identischen Membranschichtlagen funktionsgleich ausgebildet sein. Beispielsweise können sich die Flächengewichte der identisch ausgebildeten Membranschichtlagen aber um weniger als 5 g/m² voneinander unterscheiden.

Vorzugsweise können die Membranschichtlagen den gleichen oder einen unterschiedlichen Anteil an Additiven, insbesondere in Bezug auf die relative Additivmenge und/oder die Art bzw. das Material des Additivs bzw. der Additive, aufweisen. Insbesondere können wenigstens zwei Membranschichtlagen, bevorzugt die außenseitigen Membranschichtlagen, das zumindest im Wesentlichen gleiche bzw. identische Material, vorzugsweise TPU, mit einer unterschiedlichen Additivzugabe aufweisen. Die Additivzugabe kann sich in einer unterschiedlichen Menge bzw. Masse des Additivs - relativ bezogen auf das Volumen und/oder die Fläche der Membranschichtlage und/oder die gesamte Menge - und/oder in einer unterschiedlichen Additivzusammensetzung zeigen bzw. widerspiegeln.

Besonders bevorzugt ist, dass wenigstens eine Membranschichtlage der Funktionsschicht, insbesondere eine außenseitige, vorzugsweise der äußeren Schutzschicht und/oder der inneren Schutzschicht zugewandte, Membranschichtlage, als Material thermoplastisches Copolyester (TPEE) und/oder thermoplastisches Polyurethan (TPU) aufweist und/oder daraus besteht. Des Weiteren kann bei einer bevorzugten Ausführungsform des Erfindungsgedankens die Funktionsschicht aus TPEE-Schichten und/oder TPU-Schichten und/oder aus TPEE-Schichten sowie TPU-Schichten ausgebildet sein. Insbesondere sind die TPEE-Schichten und/oder die TPU-Schichten und/oder die Membranschichtlagen der Funktionsschicht fest miteinander, insbesondere untrennbar, verbunden. TPEE-Schichten besitzen eine gute bzw. hohe Weiterreißfestigkeit bei einer hohen Festigkeit sowie Steifigkeit unter Gewährleistung der Beständigkeit gegenüber Flüssigkeiten. Eine monolithische TPEE-Membran ist insbesondere gut extrudierbar und auch für dünne Folien geeignet. Zudem kann durch eine TPEE-Membran eine Extrusionskaschierung mit PP-Vliesen ermöglicht werden. Insbesondere ist eine TPEE aufweisende Membranfolie für eine mehrlagige koextrudierte Folie, insbesondere eine koextrudierte Verbundfolie, geeignet und aus technischer Sicht sinnvoll.

Thermoplastisches Polyurethan ist insbesondere intrinsisch flammenhemmend und weist ein gutes Langzeitalterungsverhalten auf, vorzugsweise für Standzeiten von größer als 10 Jahre.

Bei einer weiteren bevorzugten Ausführungsform ist vorgesehen, dass wenigstens eine außenseitige Membranschichtlage und/oder eine innere Membranschichtlage der mehrlagigen Funktionsschicht ein geschäumtes Polymer aufweist und/oder daraus besteht. Die außenseitige geschäumte Schicht der Funktionsschicht kann beim Extrusionskaschierprozess eine Verkrallung mit den äußeren Schutzschichten - das heißt der äußeren und/oder der inneren Schutzschicht - erzielen, wodurch die Verbundhaftung mit den Schutzschichten verbessert wird. Vorzugsweise ist somit die das geschäumte Polymer aufweisende außenseitige Membranschichtlage der Funktionsschicht mit der äußeren und/oder der inneren Schutzschicht jedenfalls auch durch Verkrallung verbunden. Die Verkrallung kann durch eine - aufgrund der geschäumten Polymerschicht hervorgerufene - verlangsamte Abkühlung bedingt werden. Auch Knetwirbel im Presswerk - die bei der Herstellung, insbesondere beim Kalandrieren, der Verbundfolie hervorgerufen werden - können zur Verkrallung beitragen. Insbesondere dringt die geschäumte Polymerschicht in offene Poren der der geschäumten Polymerschicht zugewandten Außenseite der Schutzschicht ein und somit wird eine feste Verbindung zu den Schutzschichten ermöglicht.

Eine innere ein geschäumtes Polymer aufweisende Membranschichtlage kann zur Gewährleistung der Nageldichtigkeit vorgesehen sein.

Insbesondere können die äußere Schutzschicht und/oder die innere Schutzschicht als eine, vorzugsweise thermoverfestigte oder nadel- oder nassstrahlverfestigte, Vliesschicht ausgebildet sein. Als Vliesschicht für die äußere Schutzschicht kann eine Polypropylen aufweisende und/oder daraus bestehende Vliesschicht vorgesehen sein. Ganz besonders bevorzugt ist die Ausbildung der äußeren Schutzschicht als Polypropylen-Nadelvliesschicht. Die Vliesschicht stellt insbesondere die mechanischen Eigenschaften der Verbundfolie sicher und gewährleistet darüber hinaus einen Schutz der zwischen den Schutzschichten eingefassten Funktionsschicht.

Erfindungsgemäß ist die äußere Schutzschicht und die innere Schutzschicht als Spinnvliesschicht und/oder als Nadelvliesschicht ausgebildet. Vorzugsweise ist die innere Schutzschicht als Nadelvliesschicht ausgebildet. Ein Spinnvliesstoff bzw. eine Spinnvliesschicht weist einen Vliesstoff aus Fasern mit zumindest im Wesentlichen unbegrenzter Länge - das heißt mit Langfasern - auf.

Zudem kann bei einer weiteren bevorzugten Ausführungsform des Erfindungsgedankens das Flächengewicht bzw. die Grammatur der äußeren Schutzschicht und/oder der inneren Schutzschicht kleiner oder gleich 250 g/m² sein. Bevorzugt liegt das vorgenannte Flächengewicht zwischen 1 g/m² bis 250 g/m², weiter bevorzugt zwischen 10 g/m² und 150 g/m², vorzugsweise zwischen 20 g/m² bis 120 g/m² und insbesondere zwischen 30 g/m² und 100 g/m². Die Grammatur der Schutzschichten ist dabei derart gewählt, dass bei einem möglichst geringen Gesamtflächengewicht der Verbundfolie weiterhin die benötigten Eigenschaften der Verbundfolie, insbesondere die Elastizität, Stabilität, Reißfestigkeit und/oder Weiterreißfestigkeit, hinreichend gewährleistet werden können, wobei die Verbundfolie aufgrund der außenseitigen Schutzschichten, die gleichfalls auch als Trägerschichten bezeichnet werden können, einen mechanischen Schutz der Funktionsschicht ermöglicht.

Die innere und die äußere Schutzschicht können eine unterschiedliche Grammatur und/oder ein unterschiedliches Flächengewicht und/oder unterschiedliche Materialzusammensetzung aufweisen. Alternativ oder zusätzlich kann vorgesehen sein, dass die innere und die äußere Schutzschicht zumindest im Wesentlichen funktionsgleich ausgebildet sind.

Unter einer funktionsgleichen Ausbildung der Schutzschichten ist insbesondere eine derartige Ausbildung zu verstehen, bei der ein Einsatz der äußeren Schutzschicht und/oder der inneren Schutzschicht vertauschbar ist, so dass sowohl die äußere Schutzschicht als auch die innere Schutzschicht der Witterungsseite zugewandt sein können. In diesem Zusammenhang ist es somit möglich, dass die Schutzschichten die gleichen Oberflächeneigenschaften aufweisen können und/oder die gleiche Grammatur aufweisen. Insbesondere kann das Flächengewicht der funktionsgleichen Schutzschichten um weniger als 5 g/m² voneinander abweichen.

Des Weiteren kann die äußere Schutzschicht und/oder die innere Schutzschicht als mechanisch, chemisch und/oder thermisch, vorzugsweise thermisch, verfestigte Vliesschicht ausgebildet sein. Eine Vliesschicht zeichnet sich insbesondere aufgrund der geringen Herstellungskosten bei einer hohen mechanischen Widerstandfähigkeit gegenüber äußeren Einflüssen aus.

Vorzugsweise ist die Funktionsschicht mit der äußeren Schutzschicht und/oder der inneren Schutzschicht fest verbunden. Insbesondere kann die äußere Schutzschicht und/oder die innere Schutzschicht mit der Funktionsschicht verklebt sein. Folglich kann zwischen der Funktionsschicht und wenigstens einer Schutzschicht eine Klebschicht vorgesehen sein. Die Verklebung der Schichten kann während der Herstellung, insbesondere während des Extrusionskaschierprozesses, erfolgen.

Bei einer weiteren bevorzugten Ausführungsform weist die äußere Schutzschicht und/oder die innere Schutzschicht und/oder die Funktionsschicht eine Haftvermittlerschicht auf. Die Haftvermittlerschicht kann insbesondere außenseitig der äußeren Schutzschicht, der inneren Schutzschicht und/oder der Funktionsschicht angeordnet sein.

Insbesondere kann die Haftvermittlerschicht als Klebschicht und/oder der Haftvermittler als Klebstoff ausgebildet sein. Vorzugsweise ermöglicht die Haftvermittlerschicht und/oder die Klebschicht eine stoffschlüssige Verbindung der miteinander zu verbindenden Schichten.

Vorzugsweise ist eine Klebschicht zwischen der Membranschicht und der äußeren und/oder der inneren Schutzschicht, insbesondere vollflächig, vorgesehen, bevorzugt zur festen sowie stoffschlüssigen Verbindung.

Die Haftvermittlerschicht kann ferner ein Polymer, insbesondere ein Haftvermittlerpolymer, aufweisen. Die Haftvermittlerschicht kann fest mit der Funktionsschicht, der inneren Schutzschicht und/oder der äußeren Schutzschicht verbunden sein. Des Weiteren kann die Haftvermittlerschicht und/oder das Haftvermittlerpolymer einen Kunststoff und/oder einen Kunstharz, vorzugsweise Polyurethan, aufweisen.

Des Weiteren kann die Haftvermittlerschicht auch in die innere Schutzschicht, in die äußere Schutzschicht und/oder in die Funktionsschicht integriert sein - und zwar derart, dass das Haftvermittlerpolymer in dem, insbesondere außenseitigen, Oberflächenbereich der vorgenannten Schichten eingefasst und/oder angeordnet ist. Somit kann die Haftvermittlerschicht als Teil bzw. Bestandteil der Funktionsschicht und/oder der äußeren Schutzschicht und/oder der inneren Schutzschicht ausgebildet sein. Durch die Haftvermittlerschicht kann eine feste Verbindung der Funktionsschicht zu den außenseitigen Schutzschichten ermöglicht werden. Der Haftvermittler bzw. das Haftvermittlerpolymer ermöglicht hierbei, dass die als Vliesschichten ausgebildeten Schutzschichten mit der Funktionsschicht dauerfest verklebt werden können.

Durch den Einbau von Funktionsmaterialien, beispielsweise den Haftvermittlverpolymer und/oder einen Flammhemmer, in die als Vliesschicht ausgebildete innere und/oder äußere Schutzschicht kann ein kostengünstiger Aufbau der Verbundfolie ermöglicht werden.

Durch den Einsatz des Haftvermittlers bzw. des Haftvermittlerpolymers und/oder der Haftvermittlerschicht in der Außenschicht der inneren und/oder der äußeren Schutzschicht kann auf den Einsatz von Hotmelts verzichtet werden (hotmeltfreie Verbindung). So kann durch den Haftvermittler und/oder den Klebstoff bereits eine ausreichende Verklebung bzw. Haftung zu der Funktionsschicht gewährleistet werden.

Zudem kann die Unterdachbahn diffusionsoffen, winddicht und/oder regensicher, insbesondere wasserdicht, und/oder wasserabweisend und/oder wasserdampfdurchlässig ausgebildet sein. Die Regendichtigkeit und/oder Wasserdampfdurchlässigkeit kann insbesondere durch die diffusionsoffene Funktionsschicht gewährleistet werden, wobei die Funktionsschicht derart ausgebildet ist, dass die Verbundfolie im Gesamten wasserdampfdurchlässig und/oder diffusionsoffen und/oder wasserdicht, insbesondere wasserdampfdurchlässig und wasserdicht, ausgebildet ist.

Bei einer regensicheren und/oder wasserdichten Ausbildung der Verbundfolie ist vorgesehen, dass diese einer Wassersäule von größer als 800 mm, bevorzugt zwischen 1.000 mm bis 20.000 mm, weiter bevorzugt zwischen 1.500 mm und 9.000 mm, Stand hält. Die Wassersäule ist eine Maßeinheit, die die Wasserdichtigkeit von technischen Geweben angibt. Sie kann nach DIN EN 20811:1992, auch ISO 811 genannt, bestimmt werden (Stand September 2018).

Vorzugsweise weist die Verbundfolie einen S_{d}-Wert von kleiner oder gleich 0,5 m, bevorzugt von 0,008 m bis 0,5 m, weiter bevorzugt von 0,009 m bis 0,2 m, weiter bevorzugt von 0,01 m bis 0,1 m, auf. Der S_{d}-Wert gibt die wasserdampfdiffusionsäquivalente Luftschichtdicke an und ist ein bauphysikalisches Maß für den Wasserdampfdiffusionswiderstand eines Bauteils oder einer Bauteilschicht. Über den S_{d}-Wert kann die Dampfdurchlässigkeit eines Baustoffs beurteilt werden. Der Wasserdampfdiffusionswiderstand wird anschaulich durch die Dicke einer Luftschicht beschrieben, die notwendig ist, so dass die Luftschicht im stationären Zustand unter denselben Bedingungen von demselben Diffusionsstrom - wie das betrachtete Bauteil - durchströmt wird. Die Verbundfolie ist insbesondere diffusionsoffen ausgebildet, wobei die Diffusionsoffenheit durch einen S_{d}-Wert von kleiner oder gleich 0,5 m charakterisiert ist.

Außerdem kann die Reißfestigkeit der Verbundfolie größer als 50 N/mm ausgebildet sein. Bevorzugt liegt die Reißfestigkeit der Verbundfolie zwischen 50 N/mm bis 600 N/mm, weiter bevorzugt zwischen 100 N/mm bis 400 N/mm. Die Reißfestigkeit der Verbundfolie kann der benötigten Kraft bis zur Rissbildung und/oder Rissausdehnung entsprechen. Die Reißfestigkeit ist insbesondere gemessen gemäß dem technischen Standard der ASTM International; und zwar der ASTM D1004 (Stand September 2018) und der ASTM D1925 (Stand September 2018).

Vorzugsweise ist die Weiterreißfestigkeit der Verbundfolie größer als 50 N/mm. Bevorzugt liegt die Weiterreißfestigkeit zwischen 50 N/mm und 500 N/mm, weiter bevorzugt zwischen 100 N/mm bis 300 N/mm. Die Weiterreißfestigkeit ist eine physikalische Größe, die eine Materialeigenschaft sowie den Einsatzbereich der Verbundfolie kennzeichnet. Die Weiterreißfestigkeit kann auch als Kerbfestigkeit bezeichnet werden. Die Weiterreißfestigkeit gibt den Widerstand eines Materials - im vorliegenden Falle der Verbundfolie - an, nach dem Einschneiden oder Einkerben nicht weiterzureißen. Je höher der ermittelte Wert der Weiterreißfestigkeit ist, desto widerstandfähiger ist der geprüfte Stoff gegen das Weiterreißen. Demgegenüber ist es bei einem niedrigeren Wert so, dass die Weiterreißfestigkeit des Materials umso geringer ist. Die Weiterreißfestigkeit schließt sich folglich messtechnisch an die Messung der Reißfestigkeit an.

Sowohl die Reißfestigkeit als auch die Weiterreißfestigkeit kann richtungsabhängig ausgebildet sein, insbesondere in Abhängigkeit der Faserrichtung (Maschinenrichtung und Querrichtung). Die vorgenannten Reißfestigkeiten gelten insbesondere für die Maschinenrichtung und/oder Querrichtung.

Dabei bezeichnet die Maschinenrichtung die Richtung, in der das Vlies bei seiner Herstellung in der bzw. durch die Maschine transportiert worden ist, also regelmäßig die Längenrichtung einer Vliesbahn. Die Querrichtung, in der sich das Vlies flächig ausdehnt, bezeichnet die Richtung, die rechtwinklig zu der Maschinenrichtung liegt, also regelmäßig die in der Breite einer Vliesbahn liegende Richtung.

Darüber hinaus ist gemäß einer weiteren Ausführungsform vorgesehen, dass wenigstens eine Verstärkungsschicht zwischen der Funktionsschicht und der äußeren Schutzschicht und/oder der inneren Schutzschicht angeordnet ist. Insbesondere kann jeweils eine Verstärkungsschicht zwischen der äußeren Schutzschicht und der Funktionsschicht und zwischen der inneren Schutzschicht und der Funktionsschicht angeordnet sein. Die Verstärkungsschicht kann als Drehergewebe ausgebildet sein. Die Verstärkungsschicht dient insbesondere zur Erhöhung der mechanischen Stabilität der Verbundfolie.

Vorzugsweise weist die Verstärkungsschicht einen Kunststoff und/oder ein Kunstharz, vorzugsweise ein Kunststoffpolymer, insbesondere Polypropylen und/oder Polyethylentherephthalat (PET), auf und/oder besteht daraus.

Als Drehergewebe werden transparente und/oder luftdurchlässige Gewebe bezeichnet, die sich durch besondere Kettfäden auszeichnen. Die Kettfäden bilden die sogenannten Dreher-Einheiten, bei denen sich ein Grund- und ein Schlingfaden aus der Kette miteinander verdrehen. Dabei wechseln sich der Einschluss des Schusses und die Verdrehung der beiden Kettfäden miteinander ab. Bei einem sogenannten Volldreher ist zwischen den Schussfäden eine komplette Drehung der Kettfäden hervorgerufen, bei einem Halbdreher kommt es zu einer einfachen Verkreuzung. Das Gewebe weist insbesondere ein geringes Flächengewicht auf. Durch das Festumschließen der Schussfäden von den beiden Kettfäden kann eine Schiebefestigkeit gewährleistet werden.

Bei einer weiteren bevorzugten Ausführungsform ist auf der Oberseite und/oder der Unterseite der Verbundfolie, insbesondere auf der Ober- und/oder Unterseite der äußeren und/oder der inneren Schutzschicht, wenigstens eine längsrandseitige Klebezone vorgesehen. Die längsrandseitige Klebezone dient zur Verklebung benachbarter Verbundfolien zur Herstellung einer aus einzelnen Verbundfolienstreifen bestehenden sowie zusammenhängenden Folienschicht. Insbesondere ist die längsrandseitige Klebezone vom Längsrand der Verbundfolie beabstandet. Des Weiteren kann die Klebezone streifenförmig, gegebenenfalls als unterbrochene Streifen, ausgebildet sein.

Insbesondere weist die Klebezone eine Breite zwischen 2 bis 10 cm auf.

Weiter bevorzugt ist ein klebefreier Bereich auf der Oberfläche der Oberseite und/oder der Unterseite der Verbundfolie von größer als 50 %, vorzugsweise zwischen 50 % bis 95 %, weiter bevorzugt zwischen 80 % bis 90 %, vorgesehen. Ein klebstofffreier bzw. kleberfreier Bereich gibt denjenigen Anteil der Oberfläche der Verbundfolie an, die nicht durch eine Klebezone verdeckt ist. Letztlich ist also die Klebezone längsrandseitig auf der Ober- und/oder der Unterseite vorgesehen.

Hierbei versteht es sich, dass die Verbundfolie eine Klebezone, zwei Klebezonen und/oder eine Mehrzahl von Klebezonen, beispielsweise vier Klebezonen, aufweisen kann. Es kann vorgesehen sein, dass auf der Oberseite und/oder der Unterseite wenigstens eine längsrandseitige Klebezone vorgesehen ist.

So kann sowohl auf der Oberseite und auf der Unterseite wenigstens eine - insbesondere genau eine - Klebezone vorgesehen sein. Des Weiteren können auch auf der Ober- oder der Unterseite zwei randseitige Klebezonen vorgesehen sein. Bei einer weiteren Ausführungsform ist im Bereich von allen vier Längsrändern der Verbundfolie jeweils eine Klebezone vorgesehen, so dass die Verbundfolie vier Klebezonen aufweist.

Vorzugsweise sind die Klebezonen zwischen 1 bis 90 mm vom Längsrand entfernt, bevorzugt zwischen 3 bis 70 mm, weiter bevorzugt zwischen 5 bis 50 mm.

Darüber hinaus kann eine streifenförmige Ausbildung der Klebezonen eine saubere und einfache Anordnung der Bahnen übereinander, insbesondere bei einer Kleber-in-Kleber-Verbindung, ermöglichen. Bei einer streifenförmigen Ausbildung der Klebezonen ist vorgesehen, dass insbesondere die Anzahl der Streifen zwischen 1 bis 15, bevorzugt zwischen 3 bis 12, weiter bevorzugt zwischen 5 bis 9, beträgt. Die Streifenbreite eines Streifens der Klebezone kann insbesondere zwischen 1 bis 30 mm, bevorzugt zwischen 1,5 bis 10 mm, weiter bevorzugt zwischen 2 bis 5 mm, liegen.

Vorzugsweise erfolgt die Verklebung der Klebezonen derart, dass bei Verklebung einer benachbarten Verbundfolie eine winddichte und/oder luftdichte Verklebung zwischen beiden Verbundfolien erfolgt. Insbesondere kann demzufolge kein Wind zwischen die verklebten Bereiche eindringen. Insbesondere erfolgt eine Kleber-in-Kleber-Verbindung, das heißt die Klebezonen werden zumindest bereichsweise übereinander angeordnet, und zwar derart, dass eine feste und dauerhafte Verklebung der Verbundfolienreihen erfolgt. In diesem Zusammenhang versteht es sich, dass die Klebezonen gleich ausgebildet sein können und/oder voneinander sich unterscheidende Eigenschaften aufweisen können.

Darüber hinaus kann die Versetzung der ober- und unterseitigen Klebezonen von einem Längsrand der Verbundfolie derart vorgesehen sein, dass bei Verklebung benachbarter Bahnen eine nur teilweise Kleber-in-Kleber-Verbindung zwischen den Klebezonen benachbarter Verbundfolie oder sogar keine solche Verbindung entsteht. Wie zuvor dargelegt, ermöglicht die Kleber-in-Kleber-Verbindung eine winddichte, luftdichte, diffusionsoffene und/oder wasserdichte Verklebung der Verbundfolie. Somit können auch an den Übergangsbereichen der Verbundfolie, insbesondere dem Längsrandbereich, die benötigten Eigenschaften der Verbundfolie, vorzugsweise bei Verlegung auf einem Steildach, hinreichend gewährleistet werden.

Bei einer weiteren bevorzugten Ausführungsform des Erfindungsgedankens ist vorgesehen, dass die Gegenfläche für die den Kleber aufweisende Klebezone mit einem Liner, insbesondere in Form eines Abziehstreifens, abgedeckt und/oder oberflächenbehandelt ist. Durch die Abdeckung des Klebers bzw. der Klebezonen kann gewährleistet werden, dass bei Verlegung der Verbundfolie keine Verschmutzung der Klebezone vorhanden ist bzw. der Grad der Verschmutzung möglichst gering gehalten wird. Folglich kann eine winddichte und/oder wasserdichte Verklebung, vorzugsweise über eine Kleber-in-Kleber-Verbindung, hergestellt werden.

Bei einer weiteren ganz besonders bevorzugten Ausführungsform des Erfindungsgedankens ist vorgesehen, dass die äußere Schutzschicht und/oder die innere Schutzschicht wenigstens eine Bikomponentenfaser mit einer ersten Komponente und einer zweiten Komponente aufweist, wobei die erste Komponente ein erstes Polymer und die zweite Komponente ein zweites Polymer als Bestandteil aufweist.

Durch die Verwendung der Bikomponentenfaser in wenigstens einer Schutzschicht kann die gesamte Festigkeit der Verbundfolie deutlich erhöht werden, bevorzugt um wenigstens 10 %, weiter bevorzugt zwischen 20 % bis 70 %.

Die die Bikomponentenfaser aufweisende Schutzschicht ist gegenüber aus dem Stand der Technik bekannten Vliesschichten, insbesondere Polypropylen- oder Polyethylen-Vliesschichten, dahingehend vorteilhaft, dass sie eine erhöhte mechanische Festigkeit gewährleistet. Darüber hinaus kann die die Bikomponentenfaser aufweisende Schutzschicht hydrophob (wasserabweisend) ausgebildet sein. Eine verbesserte Festigkeit zeigt sich gerade bei einer längerfristigen und/oder erhöhten mechanischen Beanspruchung der Verbundfolie als vorteilhaft. Wird beispielsweise die Verbundfolie als Dachbahn, insbesondere Unterspannbahn und/oder Unterdeckbahn, eingesetzt, so ist sie mechanischen Beanspruchungen nicht nur bei der Verlegung, sondern auch bei der Begehung des Dachs, beispielsweise durch Dachdecker, ausgesetzt.

Erfindungsgemäß ist insbesondere vorgesehen, dass die innere Schutzschicht und/oder die äußere Schutzschicht wenigstens eine Bikomponentenfaser aufweist bzw. einen Bikomponentenfaser-Aufbau hat. Insbesondere ist die als Vliesschicht ausgebildete innere und/oder äußere Schutzschicht als Vliesschicht aus Bikomponentenfasern ausgebildet. Insbesondere ist eine Bikomponentenfaser-Spinnvliesschicht vorgesehen.

Bikomponentenfasern der in Rede stehenden Art weisen üblicherweise eine erste Komponente aus einem ersten Polymer und eine zweite Komponente aus einem zweiten Polymer auf. Dabei kann zwischen unterschiedlichen Typen von Bikomponentenfasern unterschieden werden, die jeweils unterschiedliche charakteristische Verteilungen der Komponenten im Faserquerschnitt aufweisen. Bikomponentenfasern, bei denen die erste Komponente die zweite Komponente im Querschnitt der Faser umgibt und somit einschließt, werden als Kern-Mantel-Fasern bezeichnet. Bikomponentenfasern, bei denen sowohl die erste Komponente als auch die zweite Komponente einen Teil der Faseroberfläche im Querschnitt der Faser bildet, werden als Side-by-Side-Fasern bezeichnet. Fasern mit Strukturen, bei denen mehrere Stränge einer Komponente in einen Strang der anderen Komponente eingebettet sind, so dass sich im Querschnitt ein Bild ergibt, das an eine Mehrzahl aus einer Komponente gebildete Inseln erinnert, werden als Island-in-the-Sea-Fasern bezeichnet. Bikomponentenfasern, bei denen im Querschnitt jeweils eine Mehrzahl an Bereichen der jeweiligen Komponente vorhanden ist und die äußere Faseroberfläche bildet, werden als Segmented-Pie-Fasern bezeichnet, da die Bereiche der einzelnen Komponenten im Querschnitt regelmäßig eine tortenstückartige Aufteilung aufweisen. Als Bikomponentenfasern im Sinne der vorliegenden Anmeldung sind dabei auch ausdrücklich solche Fasern zu verstehen, die mehr als zwei Komponenten aufweisen.

Zweck der Bikomponentenfasern ist es, die Eigenschaften der Fasern oder die Eigenschaften der aus den Fasern hergestellten Spinnvliese zu verbessern. Die Eigenschaften eines Spinnvlieses hängen dabei von einer Vielzahl von Einflussfaktoren ab. Einige dieser Einflussfaktoren auf die Eigenschaften eines Spinnvlieses sind dabei Eigenschaften der jeweils verwendeten Fasern, wie z.B. deren Festigkeit. Eine weit verbreitete und zumindest in ihrem Grundgedanken anerkannte Theorie ist die, dass die Eigenschaften der resultierenden Bikomponentenfaser dann eine Kombination der Eigenschaften der einzelnen Komponenten der Bikomponentenfaser darstellen, bei der sich die Eigenschaften der einzelnen Komponenten möglichst dahingehend ergänzen, dass die Vorteile der Eigenschaften beider Komponenten in der Bikomponentenfaser vereint werden. Wird beispielsweise eine Faser gewünscht, die sowohl eine hohe Festigkeit aufweist als auch ein vorteilhaftes Verhalten beim Verbinden der Fasern untereinander bei der Vliesherstellung zeigt, so bietet es sich an, eine erste Komponente mit einer hohen Festigkeit mit einer zweiten Komponente, die eine gute Verbindbarkeit aufweist, zu kombinieren.

Zur Verbesserung der Eigenschaften der Bikomponentenfasern werden den Polymeren häufig Additive zugesetzt. Bei den Additiven kann es sich um die verschiedensten Stoffe handeln. Diese können beispielsweise zur Färbung, zur Thermostabilisation, zur Flammhemmung, zur Hydrophilierung oder zur Hydrophobierung oder zur UV-Stabilisation dienen. Dabei sind die Additive regelmäßig gleichmäßig in der Phase verteilt.

Das erste Polymer und das zweite Polymer können zumindest im Wesentlichen identisch ausgebildet sein, insbesondere wobei die erste Komponente und die zweite Komponente sich voneinander unterscheidende Additive und/oder Additivzusammensetzungen und/oder Additivmengen aufweisen.

Vorteilhafterweise handelt es sich bei dem ersten Polymer und/oder dem zweiten Polymer um ein Polyolefin oder ein Polyolefin-Copolymer, vorzugsweise um ein Polymer und/oder Copolymer des Ethylen, Propylen, Buthylen, Hexen oder Octen und/oder eine Mischung und/oder einen Blend daraus. Es hat sich gezeigt, dass diese Polymere besonders gut geeignet sind, um die erfindungsgemäßen Bikomponentenfasern daraus herzustellen. Unter einem Copolymer ist in diesen Zusammenhang ein Polymer zu verstehen, das aus mindestens zwei verschiedenen Sorten von Monomeren hergestellt wurde, wobei der Massenanteil des Monomers, welches für die Benennung des Copolymers maßgeblich ist, mindestens 50 % beträgt.

Vorzugsweise kann es sich bei dem ersten Polymer und/oder bei dem zweiten Polymer um Polyethylenterephthalat (PET) und/oder einen Polyethylenterephthalat-Copolymer handeln, insbesondere besteht das erste und/oder das zweite Polymer aus PET und/oder Co-PET.

Ganz besonders bevorzugt weist das erste Polymer Polyethylenterephthalat und das zweite Polymer Polyethylenterephthalat-Copolymer auf und/oder besteht daraus oder vice versa. Vorzugsweise ist eine als Komponenten PET und Co-PET aufweisende Bikomponentenfaser zur Erhöhung der Festigkeit in der äußeren Schutzschicht eingefasst. Insbesondere gelingt es durch die vorgenannte erfindungsgemäße Bikomponentenfaser die thermische verfestigte äußere Schutzschicht derart auszubilden, dass die Neigung zur Fusselbildung verringert und/oder die Reißfestigkeit erhöht wird, insbesondere so dass ein mechanischer Schutz vor Beschädigungen vorhanden ist.

Besonders bevorzugt ist für die Bikomponentenfaser eine Materialzusammensetzung für die erste und die zweite Komponente von Polypropylen und/oder Polyethylen und Polyethylenterephthalat und/oder Polyethylenterephthalat-Copolymer. Hierbei kann entweder das erste oder das zweite Polymer Polyproplyen und/oder Polyethylen aufweisen und/oder daraus bestehen. Je nachdem, ob das erste oder das zweite Polymer PP und/oder PE aufweist, so weist das nicht PP und/oder PE aufweisende zweite oder erste Polymer PET und/oder Co-PET auf und/oder besteht daraus. Weist folglich das erste Polymer PP und/oder PET auf, so weist das zweite Polymer PET und/oder Co-PET auf und vice versa.

Vorzugsweise weist die innere Schutzschicht eine Bikomponetenfaser auf, die als erstes Polymer Polyethylenterephthalat und als zweites Polymer Polyethylenterephthalat-Copolymer und/oder Polyethylen und/oder Polypropylen aufweist.

Gemäß einer ganz besonders bevorzugten Ausführungsform ist vorgesehen, dass die Bikomponentenfaser als Kern-Mantel-Faser ausgebildet ist, wobei der Kern als Material Polyactide (PLA) aufweist und/oder der Mantel als Material Polyethylenterephthalat und/oder Polyethylenterephthalat-Copolymer aufweist. Insbesondere kann mit einem derartigen Aufbau der Bikomponentenfaser die benötigte Hydrolysebeständigkeit gewährleistet werden.

Bei einer weiteren bevorzugten Ausführungsform ist die Bikomponentenfaser als Kern-Mantel-Faser ausgebildet, wobei der Kern als Material Polyethylenfuranoat (PEF) aufweist und/oder der Mantel als Material Polyethylenterephthalat-Copolymer, insbesondere bei einem Schmelzpunkt von 240 °C +/- 10 °C, aufweist. Insbesondere ist Polyethylenfuranoat aus zumindest im Wesentlichen 100 % nachwachsenden Rohstoffen ausgebildet, wodurch eine hohe ökologische Kompatibilität erreicht werden kann. Polyethylenfuranoat kann einen Schmelzpunkt von 235 °C +/- 10 °C aufweisen. Aufgrund der hohen Steifigkeit Polyethylenfuranoat, insbesondere im Vergleich zu PET, kann bei einer eine Bikomponentenfaser der vorgenannten Art aufweisenden Schutzschicht eine besonders zugsteife Vliesschicht erwartet werden.

Vorzugsweise weist die erste Komponente ein Additiv auf, wobei der Massenanteil des Additivs in der zweiten Komponente kleiner ist als in der ersten Komponente. Erfindungsgemäß kann die erste Komponente somit ein Additiv zur Eigenschaftsbeeinflussung bzw. -verbesserung aufweisen.

Dabei beträgt vorzugsweise der Massenanteil des Additivs der ersten Komponente in der zweiten Komponente höchstens 66,6%, weiter vorzugsweise höchstens 50% und insbesondere höchstens 33,3%. Ganz besonders bevorzugt ist das Additiv in der zweiten Komponente nicht vorhanden.

Vorzugsweise ist dabei der Massenanteil der ersten Komponente an der Bikomponentenfaser höchstens 50%, bevorzugt 25%, besonders bevorzugt 10%, ganz besonders bevorzugt 5%. Dabei ist die Bikomponentenfaser besonders bevorzugt eine Kern-Mantel-Faser, wobei die erste Komponente den Mantel bildet.

Der Vorteil der Aufkonzentrierung der Additive in der ersten, die zweite Komponente umgebenden Komponente liegt darin, dass sich gezeigt hat, dass die Menge des benötigten Additivs in der zweiten Komponente niedriger sein kann als bei der üblichen Gleichverteilung des Additivs in den beiden Komponenten, wenn die gleiche oder eine verbesserte Wirkung des Additivs erzeugt werden soll.

Unter Additiv in diesem Sinne werden Zusatzstoffe verstanden, die dem Polymer in der jeweiligen Komponente zugefügt werden, um die Eigenschaften der resultierenden Faser bzw. des aus der Faser gewonnenen Spinnvlieses zu modifizieren und dadurch zu verbessern.

Beispielsweise lässt sich bei der Durchführung eines Brandtests gemäß EN 13501-1 feststellen, dass bei der erfindungsgemäßen Verteilung des Additivs in den Komponenten eine geringere Menge des Additivs insgesamt, in diesem Beispiel ein Flammhemmer, ausreicht, um zu einem positiven Testergebnis zu führen, als wenn der Flammhemmer gleichmäßig in der Faser verteilt ist. Bei diesem Test wird innerhalb von Sekundenbruchteilen die gesamte Faser von der Flamme erfasst, daher lässt sich der vorteilhafte Effekt nicht ohne Weiteres auf einer Art Abschirmungswirkung des Mantelbereichs der Faser zurückführen.

Die Additive, die in geringen Konzentrationen den Polymeren zugesetzt werden, stellen im Hinblick auf die Faserherstellung grundsätzlich eine Verunreinigung des Polymers dar. Bei Verunreinigungen besteht grundsätzlich immer das Risiko, dass sich aufgrund dieser Verunreinigungen das Verhalten der Komponenten bei der Herstellung der Faser ändert. Daher birgt eine Ungleichverteilung der Additive in den Komponenten der Bikomponentenfaser aus der Sicht des Fachmannes zunächst das Risiko, dass sich die Qualität der Bikomponentenfaser oder die Stabilität des Herstellungsprozesses verschlechtert. Zudem kommt es aus der Sicht des Fachmannes regelmäßig nicht darauf an, dass ein Additiv in einer bestimmten Zone der Faser aufkonzentriert wird. Dies liegt an der geringen Dicke der in Rede stehenden Fasern. Ähnlich wie es bei Farbstoffen oder Pigmenten der Fall ist, macht es auch bei Additiven aus der Sicht des Fachmannes ebenfalls keinen offensichtlichen Sinn, diese in einer bestimmten Zone der Faser anzureichern. So wird beispielsweise bei einem Flammenhemmer ohnehin die gesamte Faser von den Verbrennungsvorgängen betroffen sein. Auch wird UV-Strahlung in die gesamte Faser eindringen. Dennoch hat sich überraschenderweise gezeigt, dass in einigen Fällen sogar besonders vorteilhafte Ergebnisse erzielt werden können, wenn das Additiv in der einen Komponente nicht nur verringert, sondern gänzlich weggelassen wird. Ein Vorteil der Aufkonzentrierung der Additive in der ersten Komponente ist jedenfalls die Kostenersparnis durch die niedrigere benötigte Additivmenge.

Vorteilhafterweise handelt es sich bei dem Additiv um ein primäres oder sekundäres Antioxidanz, einen UV-Absorber, einen UV-Stabilisator, einen Flammhemmer, ein Antistatikum, ein Gleitmittel, einen Metalldesaktivator, ein Hydrophilierungsmittel, ein Hydrophobierungsmittel, ein Antifogging-Additiv und/oder ein Biozid. Besonders bevorzugt sind dabei folgende Stoffklassen und Mischungen daraus:
- Sterisch gehinderte Phenole, aromatische sekundäre oder tertiäre Amine, Aminophenole, aromatische Nitro- oder Nitrosoverbindungen als primäre Antioxidantien.
- Organische Phosphite oder Phosphonate, Thioether, Thioalkohole, Thioester, Sulfide und schwefelhaltige organische Säuren, Dithiocarbamate, Thiodipropionate, Aminopyrazole, metallhaltige Chelate, Mercaptobenzimidazole als sekundäre Antioxidantien.
- Hydroxybenzophenone, Cinnamate, Oxalanilide, Salicylate, 1,3 Benzoldiol-Monobenzoate, Benzotriazole, Triazine, Benzophenone sowie UVabsorbierende Pigmente wie Titandioxid oder Ruß als UV-Absorber.
- Metallhaltige Komplexe organischer Schwefel- oder Phosphorverbindungen, sterisch gehinderte Amine (HALS) als UV-Stabilisatoren.
- Metallhydroxide, Borate, organische brom- oder chlorhaltige Verbindungen, organische Phosphorverbindungen, Antimontrixoxid, Melamin, Melamincyanurat, Blähgraphit oder andere Intumeszenz-Systeme als Flammhemmer.
- Quartäre Ammoniumsalze, Alkylsulfonate, Alkylsufate, Alkylphosphate, Dithiocarbamate, (Erd-)Alkalimetallcarboxylate, Polyethylenglykole sowie deren Ester und Ether, Fettsäureester, Ethoxylate, Mono- und Diglyceride, Ethanolamine als Antistatika.
- Fettalkohole, Ester von Fettalkoholen, Fettsäuren, Fettsäureester, Dicarbonsäureester, Fettsäureamide, Metallsalze von Fettsäuren, Polyolefinwachse, natürliche oder künstliche Paraffine und deren Derivate, Fluorpolymere und Fluoroligomere, Antiblockmittel wie Kieselsäuren, Silikone, Silikate, Calciumcarbonat etc. als Gleitmittel.
- Amide von Mono- und Dicarbonsäuren und deren Derivate, zyklische Amide, Hydrazone und Bishydrazone, Hydrazide, Hydrazine, Melamin und dessen Derivate, Benzotriazole, Aminotriazole, sterisch gehinderte Phenole in Verbindung mit komplexierenden Metallverbindungen, Benzylphosphonate, Pyridithiole, Thiobisphenolester als Metalldesaktivatoren.
- Polyglycole, Ethoxylate, Fluorpolymere und Fluoroligomere, Montanwachse, insbesondere Stearate, als Hydrophilierungs-, Hydrophobierungs- oder Anti-Fogging-mittel.
- 10,10'-Oxybisphenoxarsin (OBPA), N-(Trihalogen-methylthiol)phthalimid, Tributylzinnoxid, Zinkdimethyldithiocarbamat, Diphenylantimon-2-ethylhexanoat, Kupfer-8-hydroxychinolin, Isothiazolone, Silber und Silbersalze als Biozide.

Vorteilhafterweise ist die Differenz der Schmelzpunkte der ersten Komponente und der zweiten Komponente kleiner oder gleich 8 °C. Hinzuweisen ist darauf, dass in den angegebenen Intervallen jedwede Einzelintervalle oder Einzelwerte enthalten und als erfindungswesentlich offenbart anzusehen sind, auch wenn sie im Einzelnen nicht genannt sind.

Im Zusammenhang mit der vorteilhaften Wahl der Schmelzpunkte hat sich überraschenderweise gezeigt, dass bei Bikomponentenfasern, bei denen die beiden Komponenten ähnliche Schmelzpunkte aufweisen, eine Verbesserung der Synergieeffekte zwischen den Eigenschaften der beiden Komponenten erzielt werden kann. Dies betrifft insbesondere mechanische Eigenschaften. Beispielsweise ist es möglich, im Falle eines aus erfindungsgemäßen Bikomponentenfasern hergestellten Spinnvlieses sowohl die spezifische Reißkraft als auch die spezifische Nagelausreißkraft zu steigern. Bei konventionellen Fasern nach dem Stand der Technik gingen Maßnahmen bei der Herstellung von Spinnvliesen aus diesen Fasern, die der Steigerung der spezifischen Reißkräfte dienten, regelmäßig mit einer Senkung der spezifischen Nagelausreißkräfte einher. Im umgekehrten Fall führten Maßnahmen zur Steigerung der spezifischen Nagelausreißkräfte regelmäßig zum Sinken der spezifischen Reißkräfte. Diese nachteiligen Effekte können mit den vorteilhaften Bikomponentenfasern vermieden oder zumindest abgeschwächt werden.

Zu den positiven Effekten der vorliegenden Erfindung gehört auch, dass sich der Anteil rezyklierten Materials, der einer der Komponenten bei der Herstellung der Bikomponentenfaser zugesetzt werden kann, gegenüber herkömmlichen Fasern steigert. Es hat sich gezeigt, dass bei der Verwendung von Komponenten mit erfindungsgemäß kombinierten Schmelzpunkten die Änderung der Eigenschaften einer Komponente, die durch die Zugabe von rezykliertem Material verursacht wird, weitaus geringer ausfällt als bei herkömmlichen Fasern.

Dabei bildet vorzugsweise die Komponente mit dem niedrigeren Schmelzpunkt im Querschnitt der Faser die äußere Oberfläche der Faser. Vorzugsweise umgibt die Komponente mit dem niedrigeren Schmelzpunkt die Komponente mit dem höheren Schmelzpunkt. Diese vorteilhafte Ausgestaltung führt dazu, dass die niedrigschmelzende Komponente im Mantelbereich der Faser für eine bessere Verfestigbarkeit des Materials sorgt, zudem verbessert sich die Spinnstabilität sowie die Dehnbarkeit der Fasern. Dies führt zu einer Verbesserung der Weichheit und/oder Haptik des Spinnvlieses, des Weiteren wird die Drapierbarkeit der Fasern bzw. eines aus den Fasern gewonnenen Spinnvlieses verbessert.

Im Zusammenhang mit der Erfindung ist es vorteilhaft, wenn die Differenz der Schmelzpunkte der ersten Komponente und der zweiten Komponente höchstens 6 °C oder zwischen 1 °C bis 8 °C, bevorzugt zwischen 1 °C bis 6 °C, ist. In diesen vorteilhaften Parameterbereichen treten die positiven Effekte der vorliegenden Erfindung signifikant stärker auf.

Vorzugsweise ist der Massenanteil der Komponente mit dem niedrigeren Schmelzpunkt an der Bikomponentenfaser höchstens 50 %, weiter vorzugsweise höchstens 25 %, bevorzugt höchstens 10 %, insbesondere höchstens 5 %. Dabei ist die Bikomponentenfaser besonders bevorzugt eine Kern-Mantel-Faser, wobei die Komponente mit dem niedrigeren Schmelzpunkt den Mantel bildet.

Vorteilhafterweise ist die Differenz der Melt-Flow-Indices der ersten Komponente und der zweiten Komponente kleiner oder gleich 25 g/10 min, wobei die Melt-Flow-Indices (im Folgenden MFI) der ersten Komponente und der zweiten Komponente jeweils kleiner oder gleich 50 g/10 min sind. Bevorzugt ist die Differenz der Melt-Flow-Indices der ersten Komponente und der zweiten Komponente kleiner oder gleich 20 g/10 min, besonders bevorzugt 15 g/10 min und/oder die MFIs der ersten Komponente und der zweiten Komponente sind jeweils kleiner oder gleich 40 g/10 min. Eine derartige vorteilhafte Auswahl der Komponenten nach dem Kriterium ihrer MFIs wirkt sich überraschenderweise auf ähnliche Art positiv aus wie die erfindungsgemäße Auswahl der Komponenten anhand ihrer Schmelzpunkte.

Dabei wird der MFI gemessen nach ISO 1133 mit einer Prüflast von 2,16 kg und einer Prüftemperatur von 230 °C. Der MFI wird dabei auch als Schmelzflussindex oder auch als Schmelzemasse-Fließrate (MFR) bezeichnet. Die Ermittlung erfolgt nach ISO 1133, indem das Material in einem beheizbaren Zylinder aufgeschmolzen und mittels der Prüflast durch eine definierte Düse gedrückt wird. Der MFI ist ein Maß für die Viskosität der Schmelze der jeweiligen polymerhaltigen Komponente. Die Viskosität wiederum hängt zusammen mit dem Polymerisationsgrad, welcher der mittleren Anzahl von Monomereinheiten in jedem Molekül eines Polymers entspricht.

Der positive Einfluss der vorteilhaften Differenzen der MFIs betrifft im Wesentlichen die spezifische Reißkraft und die spezifische Nagelausreißkraft. Diese beiden Kennwerte eines aus den Fasern hergestellten Spinnvlieses lassen sich durch die vorteilhaft gewählten MFIs verbessern. Dabei ist sogar eine gleichzeitige Steigerung beider Kennwerte möglich, jedenfalls aber lässt sich einer der beiden Kennwerte verbessern, ohne dass der andere Kennwert sich verschlechtert. Dies macht sich auch positiv in den haptischen Eigenschaften bemerkbar. So lässt sich die spezifische Reißkraft steigern, ohne dass Weichheit und der sogenannte "textile Griff" negativ beeinflusst werden. Unter textilem Griff wird dabei ein als angenehm empfundenes Berührungsgefühl verstanden.

Vorzugsweise ist der Massenanteil der Komponente mit dem höheren MFI an der Bikomponentenfaser höchstens 50 %, weiter vorzugsweise höchstens 25 %, bevorzugt höchstens 10 %, insbesondere höchstens 5 %. Dabei die Bikomponentenfaser besonders bevorzugt eine Kern-Mantel-Faser, wobei die Komponente mit dem höheren MFI den Mantel bildet.

Vorteilhafterweise ist das Polymer einer der beiden Komponenten mit einem Metal-Iocen-Katalysator polymerisiert worden und das Polymer der anderen Komponente ist mit einem Ziegler-Natta-Katalysator polymerisiert und einer anschließenden Visbreaking-Behandlung unterzogen worden. Dabei handelt es sich bei dem Polymer vorzugsweise um ein Polyolefin, insbesondere Polypropylen, Polyethylen oder deren Copolymer oder eine Mischung daraus. Das andere Polymer ist vorzugsweise ebenfalls Polyolefin oder ein Polyolefin-Copolymer. Dabei ist es besonders vorteilhaft, wenn beide Polymere aus dem gleichen Monomer aufgebaut sind oder zumindest überwiegend aus dem gleichen Monomer aufgebaut sind.

Metallocen-Katalysatoren sind strukturell einheitliche Katalysatoren, die von Cyklopentadien-Liganden koordinierte Übergangsmetalle enthalten. Derartige Katalysatoren sind detailliert in der US 5,374,696 und der US 5,064,802 beschrieben. Auf die diesbezügliche Offenbarung wird ausdrücklich Bezug genommen. Der Vorteil dieser Katalysatoren ist es, dass die mit diesen Katalysatoren hergestellten Polymere eine enge Molekulargewichtsverteilung aufweisen. Die enge Molekulargewichtsverteilung führt zu Vliesen mit hoher Reißdehnung. Dabei ist die Reißdehnung die Dehnung der Fasern, die sich am Maximum der Reißkraft ergibt, die beim Zerreißen eines Vliesstreifens aufgewendet wird. Vor allem aber führt eine enge Molekulargewichtsverteilung zu einer Erhöhung der Prozesssicherheit bei der Herstellung der Spinnvliese. Die Häufigkeit von Spinnstörungen, wie beispielsweise Faserbruch, wird reduziert. Weiterhin ist eine höhere Verstreckung der Fasern möglich, es können höhere Spinngeschwindigkeiten erreicht werden und die Titer, die erreicht werden können, sind niedriger. Dabei bedeuten niedrigere Titer eine höhere Feinheit der Fasern und/oder der aus den Fasern gewonnenen Garne.

Ein weiterer Vorteil der Metallocen-Katalysatoren bzw. der mittels Metallocen-Katalysatoren hergestellten Polymere ist, dass der Restgehalt des Katalysators im Polymer sehr gering ist. Der Restgehalt des Katalysators im Polymer stellt eine Verunreinigung des Polymers dar und kann dazu führen, dass die Eigenschaften des Polymers in unerwünschter Weise verändert werden. So kann es beispielsweise zu Verfärbungen bei der Verarbeitung des Polymers kommen.

Ein Nachteil der Metallocen-Katalysatoren ist deren im Vergleich zu den Ziegler-Natta Katalysatoren geringfügig höherer Preis. Weiterhin kann eine thermische Verfestigung der Fasern bei der Vliesherstellung bei dem Einsatz von Metallocen-Katalysatoren erschwert werden. Dies kann dann der Fall sein, wenn die durch den Einsatz von Metallocen-Katalysatoren eröffneten Möglichkeiten, die Kristallinität und Festigkeit der einzelnen Fasern durch deren höhere Verstreckbarkeit zu erhöhen, in hohem Maße ausgenutzt wird.

Ziegler-Natta-Katalysatoren sind heterogene Mischkatalysatoren, die metallorganische Verbindungen von Hauptgruppenelementen und Übergangsmetallverbindungen enthalten. Als Hauptgruppenelemente werden insbesondere Elemente der ersten bis dritten Hauptgruppe verwendet. Die Übergangsmetallverbindungen enthalten insbesondere Metalle der Titangruppe. Es existiert eine Vielzahl von Varianten dieser Katalysatoren. Im Sinn der vorliegenden Erfindung sind die Ziegler-Natta-Katalysatoren im Wesentlichen durch ihre Abgrenzung von den Metallocen-Katalysatoren definiert.

Die Ziegler-Natta-Katalysatoren sind zwar kostengünstiger als die Metallocen-Katalysatoren, die mit den Ziegler-Natta-Katalysatoren erzeugten Poylmere weisen jedoch eine deutlich breitere Molekulargewichtsverteilung auf als mit Metallocen-Katalysatoren hergestellte Polymere. Zur Verbesserung der Verstreckbarkeit der Fasern, was insbesondere der Erhöhung der Prozesssicherheit dient, werden die mit Ziegler-Natta-Katalysatoren hergestellten Polymere daher üblicherweise nachbehandelt. Diese Nachbehandlung wird als "Visbreaking" bezeichnet. Bei der Visbreaking-Behandlung werden Polymerketten gespalten, wodurch sich das Molekulargewicht der einzelnen Moleküle verringert und die Anzahl der Moleküle erhöht. Dabei verringert sich auch die Breite der Molekulargewichtsverteilung. Die Spaltung der Polymerketten wird durch Hitze, Bestrahlung, die Zugabe von Peroxyd oder durch ähnliche Maßnahmen herbeigeführt. Beispiele solcher Visbreaking-Behandlungen sind u. a. in der US 4,282,076 und der US 5,723,217 beschrieben.

Durch eine derartige Visbreaking-Behandlung kann jedoch weder die enge Molekulargewichtsverteilung der mit Metallocen-Katalysatoren erzeugten Polymere, noch die gute Verstreckbarkeit der aus diesen Polymeren gewonnenen Fasern erzielt werden. Auch weisen mit Ziegler-Natta-Katalysatoren erzeugte Polymere einen höheren Gehalt an Verunreinigungen auf als Polymere, die mit Metallocen-Katalysatoren erzeugt worden sind. Dies liegt zum einen daran, dass bei der Herstellung des Polymers mit einem Ziegler-Natta-Katalysator ein vergleichsweise höherer Katalysatorgehalt benötigt wird, der einen vergleichsweise höheren Anteil an Katalysatorrückständen im Polymer bedingt und zum anderen an Hilfsstoffen, die im Rahmen der Visbreaking-Behandlung zugegeben werden, wodurch sie eine zusätzliche Quelle für Verunreinigungen des fertigen Polymers darstellen.

Der Vorteil von Polymeren, die unter Verwendung von Ziegler-Natta-Katalysatoren mit einer anschließenden Visbreaking-Behandlung hergestellt werden, ist vor allem deren günstiger Preis und deren hohe Verfügbarkeit auf dem Markt. Ein weiterer Vorteil ist die gute thermische Verbindbarkeit der aus diesen Polymeren hergestellten Fasern.

Es hat sich nun überraschenderweise gezeigt, dass die vorteilhafte Auswahl der Polymere anhand der Katalysatoren, die bei ihrer Herstellung verwendet wurden, dazu führt, dass die resultierenden Bikomponentenfasern eine Kombination der Vorteile der Verwendung der jeweiligen Katalysatortypen ermöglicht. So ist es möglich, die Kosten gegenüber der Verwendung reiner mittels Metallocen-Katalysatoren hergestellter Polymerfasern zu senken, dabei jedoch gleichzeitig die Vorteile der Verwendung von Metallocen-Katalysatoren zu verwirklichen. Zusätzlich kann dabei noch eine bessere Verbindbarkeit der Fasern im Vergleich zu Fasern aus Polymeren, die ausschließlich unter Verwendung von Metallocen-Katalysatoren erzeugt wurden, erzielt werden.

Vorzugsweise ist der Massenanteil der Komponente, deren Polymer mit einem Metallocen-Katalysator polymerisiert worden ist, an der Bikomponentenfaser höchstens 50 %, weiter vorzugsweise höchstens 25 %, bevorzugt höchstens 10 %, insbesondere höchstens 5 %. Dabei ist die Bikomponentenfaser besonders bevorzugt eine Kern-Mantel-Faser, wobei die Komponente, deren Polymer mit einem Metal-Iocen-KataIysator polymerisiert worden ist, den Mantel bildet.

Vorzugsweise ist die Bikomponentenfaser eine Kern-Mantel-Faser, wobei der Massenanteil des Kerns 50 % bis 98 %, bevorzugt 60 % bis 95 %, besonders bevorzugt 70 % bis 95 %, ganz besonders bevorzugt 80 % bis 90 % ist. Es hat sich gezeigt, dass die Vorteile der erfindungsgemäßen Bikomponentenfaser, wenn es sich bei dieser um eine Kern-Mantel-Faser handelt, in besonderem Maße bei diesen vorteilhaften Massenteilen des Kerns auftreten.

Handelt es sich bei der Bikomponentenfaser um eine Side-by-Side-Faser, Segmented-Pie-Faser oder Islands-in-the-Sea-Faser liegt das Massenverhältnis der beiden Komponenten im Bereich von 10 : 90 bis zu 90 : 10, bevorzugt im Bereich von 70 : 30 bis zu 30 : 70, besonders bevorzugt im Bereich von 60 : 40 bis zu 40 : 60, liegt. Bei diesen Fasertypen hat sich gezeigt, dass sich die Vorteile der erfindungsgemäßen Bikomponentenfaser besonders gut für die aufgeführten Komponentenverhältnisse erzielen lassen.

Bei einer anderen bevorzugten Ausführungsform handelt es sich bei der Bikomponentenfaser um eine multilobale, insbesondere um eine tetralobale oder trilobale Faser. Diese Fasern bieten aufgrund ihrer Querschnittsgeometrie eine höhere spezifische Oberfläche als vergleichbare Fasern mit kreisrunden Querschnitten. In Verbindung mit diesen lassen sich die Vorteile der erfindungsgemäßen Fasern besonders effizient ausnutzen, insbesondere dann, wenn die unterschiedlichen Eigenschaften der Komponenten, die durch die erfindungsgemäße Bikomponentenfaser optimiert werden sollen, Eigenschaften sind, welche die Oberfläche der Faser betreffen.

Vorteilhafterweise beträgt der Durchmesser der Bikomponentenfaser zwischen 1 µm und 50 µm, bevorzugt zwischen 5 µm und 30 µm, besonders bevorzugt zwischen 8 µm und 20 µm. Es hat sich gezeigt, dass gerade bei Faserdurchmessern, die in diesen vorteilhaften Bereichen liegen, die Kombination zweier Komponenten in einer Bikomponentenfaser in besonderem Maße zu Synergieeffekten führt.

Insbesondere ist die äußere Schutzschicht und/oder die innere Schutzschicht als ein Spinnvlies mit erfindungsgemäßen Bikomponentenfasern ausgebildet. Das Spinnvlies kann dabei die nachfolgend beschriebenen Vorteile und/oder Eigenschaften aufweisen.

Durch die Verwendung des Bikomponenten-Aufbaus der als Vliesschicht ausgebildeten inneren und/oder äußeren Schutzschicht kann eine höhere Festigkeit, insbesondere eine um bis zu 20 % verbesserte Festigkeit, im Vergleich zu einem Polypropylen-Spinnvlies erreicht werden. Des Weiteren können sehr gute Witterungsstabilitätseigenschaften, insbesondere verbesserte UV- und Hydrolyse-Eigenschaften, bereitgestellt werden.

Zwei Eigenschaften, die bei Spinnvliesen eine besondere Rolle spielen, sind die spezifische Reißkraft des Spinnvlieses sowie die spezifische Nagelausreißkraft des Spinnvlieses. Dabei wird eine wünschenswerte hohe spezifische Reißkraft durch Fasern mit hoher Festigkeit erreicht.

Unter guter Verbindbarkeit ist in diesem Sinne zu verstehen, dass sich beim Verbinden der Fasern während der Herstellung eines Spinnvlieses die Beweglichkeit der Fasern im Spinnvlies möglichst definiert einstellen lässt. Die gezielte Einstellung der Beweglichkeit der Fasern im Vlies, welche von der Stärke der Verbindung der Fasern untereinander abhängt, ist die Voraussetzung für die Herstellung eines Spinnvlieses mit hoher spezifischer Reißfestigkeit und gleichzeitig hoher spezifischer Nagelausreißkraft.

In der Praxis kann das Problem bestehen, dass geeignete Fasern mit hoher Festigkeit eine schlechte Verbindbarkeit aufweisen und Fasern mit einer guten Verbindbarkeit lediglich eine niedrige Festigkeit aufweisen. Daher ist gerade im Falle der Herstellung eines Spinnvlieses, welches sowohl eine hohe spezifische Reißkraft als auch eine hohe spezifische Nagelausreißkraft aufweisen soll, der Einsatz einer Bikomponentenfaser sinnvoll. Dabei eignet sich in besonderem Maße die erfindungsgemäßen Bikomponentenfasern dazu, eine hohe spezifische Reißkraft und eine hohe spezifische Nagelausreißkraft eines Spinnvlieses zu ermöglichen, da gerade die erfindungsgemäßen Bikomponentenfasern im Hinblick auf eine Kombination aus guter Verbindbarkeit und hoher Festigkeit optimiert werden können.

Ein solcher aus den erfindungsgemäßen Fasern hergestellter Vliesstoff eignet sich für zahlreichen Anwendungen, beispielsweise in der Medizin, im Hygienebereich, in der Automobilindustrie, im Bekleidungsbereich, in Heim- und technischen Textilien sowie insbesondere im Baubereich und der Landwirtschaft. Erfindungsgemäß überschneidet sich der Anwendungsbereich des Vliesstoffes mit dem Anwendungsbereich der Verbundfolie. Mögliche Anwendungen umfassen des weiteren die Verwendung in Filter und Membranen, Batterieseparatoren sowie als Stützvlies für Laminate und als Träger für Beschichtungen aller Art.

Vorteilhafterweise beträgt die spezifische Reißkraft des Spinnvlieses mindestens 1,8 N/g . 5 cm in Maschinenrichtung und/oder mindestens 1,3 N/g · 5 cm in Querrichtung, vorzugsweise 2,0 N/g · 5 cm in Maschinenrichtung und/oder mindestens 1, 5 N/g · 5 cm in Querrichtung, bevorzugt mindestens 2,2 N/g · 5 cm in Maschinenrichtung und/oder mindestens 2,0 N/g · 5 cm in Querrichtung, besonders bevorzugt mindestens 2,4 N/g · 5 cm in Maschinenrichtung und/oder mindestens 1,9 N/g · 5 cm in Querrichtung. Die spezifische Reißkraft wird dabei gemessen nach EN 12311-1.

Es hat sich gezeigt, dass diese vorteilhaften Mindestwerte für die spezifische Reißkraft des Spinnvlieses jedenfalls angestrebt werden sollten, wenn erfindungsgemäße Bikomponentenfasern für die Herstellung des Spinnvlieses verwendet werden. Die erfindungsgemäßen Bikomponentenfasern erlauben es, diese vorteilhaften Mindestwerte für die spezifische Reißkraft zu erzielen, ohne dass dabei die spezifische Nagelausreißkraft unverhältnismäßig absinkt.

Vorteilhafterweise beträgt die spezifische Nagelausreißkraft des Spinnvlieses mindestens 1,0 N/g in Maschinenrichtung und/oder mindestens 1,2 N/g in Querrichtung, vorzugsweise mindestens 1,4 N/g in Maschinenrichtung und/ oder mindestens 1,5 N/g in Querrichtung, bevorzugt mindestens 1,6 N/g in Maschinenrichtung und/oder mindestens 1,8 N/g in Querrichtung, besonders bevorzugt mindestens 1,8 N/g in Maschinenrichtung und/oder mindestens 2,1 N/g Querrichtung.

Die spezifische Nagelausreißkraft ist dabei die maximale Kraft, die beim Zerreißen eines Vliesstreifens auftritt, wenn der Vliesstreifen bereits eine gegebene Beschädigung, nämlich einen durch den Vliesstoff gestoßenen Nagel, aufweist. Gemessen wird die spezifische Nagelausreißkraft nach EN 12310-1. Es hat sich gezeigt, dass die genannten Mindestwerte für die spezifische Nagelausreißkraft des Spinnvlieses angestrebt werden können, ohne dass die spezifische Reißkraft des Spinnvlieses unverhältnismäßig absinkt, wenn erfindungsgemäße Bikomponentenfasern entsprechend hinsichtlich ihrer Verbindbarkeit und Festigkeit optimiert werden. Insbesondere ist es dabei auch möglich, eine Kombination der genannten spezifischen vorteilhaften Nagelausreißkräfte und der zuvor genannten, vorteilhaften spezifischen Mindestreißkräfte zu realisieren.

Die Kombination dieser beiden vorteilhaften Mindestparameter führt zu einem Spinnvlies, welches im Hinblick auf seine mechanischen Eigenschaften für eine Vielzahl von Anwendungen geeignet ist. Ein derartiges Spinnvlies kann beispielsweise gut im Baubereich eingesetzt werden, wo häufig eine Befestigung der Spinnvliesbahnen durch Nageln, Tackern oder Schrauben möglich sein muss. Das Spinnvlies darf dabei nicht ab- oder ausreißen, wenn es beispielsweise auf einem Dach befestigt wird. Auch ist eine Verwendung dieser vorteilhaften Spinnvliese als Geotextilien gut möglich. Geotextilien müssen jedenfalls eine hohe Toleranz für punktuelle Beschädigungen, wie sie beispielsweise durch spitze Steine verursacht werden können, aufweisen.

In der Praxis geht eine hohe spezifische Nagelausreißfestigkeit oft mit einer guten Haptik einher. Die Weichheit und der textile Griff derartiger Spinnvliese und der Verbundfolien eröffnen daher auch Anwendungen, z.B. Anwendungen im Hygiene- oder Medizinbereich. Ursächlich für die gute Haptik ist die hohe Beweglichkeit einzelner Fasern, die regelmäßig mit dem Auftreten hoher Nagelausreißkräfte einhergeht. Fasern, die sich derart verhalten, weisen in der Praxis regelmäßig auch als weich und angenehm empfundene haptische Eigenschaften auf. Die Fasersegmentbeweglichkeit ermöglicht es, dass sich Fasern bei der Bewegung des Nagels durch das Vlies in dem Nagel "sammeln", indem sie den Nagel, der sich durch das Vlies bewegt, ausweichen und nicht sofort zerreißen. Dies führt zu einer Zone erhöhter Faserdichte, also eine Zone erhöhter Festigkeit, um den Nagel.

Des Weiteren betrifft die vorliegende Erfindung die Verwendung einer Verbundfolie nach einem der zuvor beschriebenen Ausführungsformen als Baufolie, Fassadenbahn, Gebäudehülle und/oder Dachbahn und/oder für den Einsatz in der Bauwirtschaft.

Um unnötige Wiederholungen zu vermeiden wird auf die vorherigen Ausführungen, Vorteile und/oder bevorzugte Ausführungsformen verwiesen, die in gleicher Weise auch für die erfindungsgemäße Verwendung gelten.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, selbst wenn diese Zwischenintervalle und Einzelwerte nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen und deren Rückbeziehung.

Es zeigt:
- Fig. 1: eine schematische Querschnittsansicht der erfindungsgemäßen Verbundfolie,
- Fig. 2: eine schematische Querschnittsansicht einer weiteren Ausführungsform der erfindungsgemäßen Verbundfolie,
- Fig. 3: eine schematische Querschnittsansicht einer weiteren Ausführungsform der erfindungsgemäßen Verbundfolie,
- Fig. 4: eine schematische Querschnittsansicht einer weiteren Ausführungsform der erfindungsgemäßen Verbundfolie,
- Fig. 5: eine schematische Querschnittsansicht einer weiteren Ausführungsform der erfindungsgemäßen Verbundfolie,
- Fig. 6: eine schematische Querschnittsansicht einer weiteren Ausführungsform der erfindungsgemäßen Verbundfolie,
- Fig. 7: eine schematische Querschnittsansicht einer weiteren Ausführungsform der erfindungsgemäßen Verbundfolie,
- Fig. 8: eine schematische und perspektivische Querschnittsansicht einer weiteren Ausführungsform der erfindungsgemäßen Verbundfolie,
- Fig. 9: eine schematische Querschnittsansicht einer weiteren Ausführungsform der erfindungsgemäßen Verbundfolie,
- Fig. 10: eine schematische Querschnittsansicht einer weiteren Ausführungsform der erfindungsgemäßen Verbundfolie,
- Fig. 11: eine Querschnittsansicht einer Ausführungsform einer erfindungsgemäßen Bikomponentenfaser als Kern-Mantel-Faser,
- Fig. 12: eine Querschnittsansicht einer Ausführungsform einer erfindungsgemäßen Bikomponentenfaser als Kern-Mantel-Faser mit dünnem Mantel,
- Fig. 13: eine Querschnittsansicht einer weiteren Ausführungsform einer erfindungsgemäßen Bikomponentenfaser als Kern-Mantel-Faser mit exzentrisch angeordnetem Kern und
- Fig. 14: ein Teil eines beispielshaften erfindungsgemäßen Spinnvlieses.

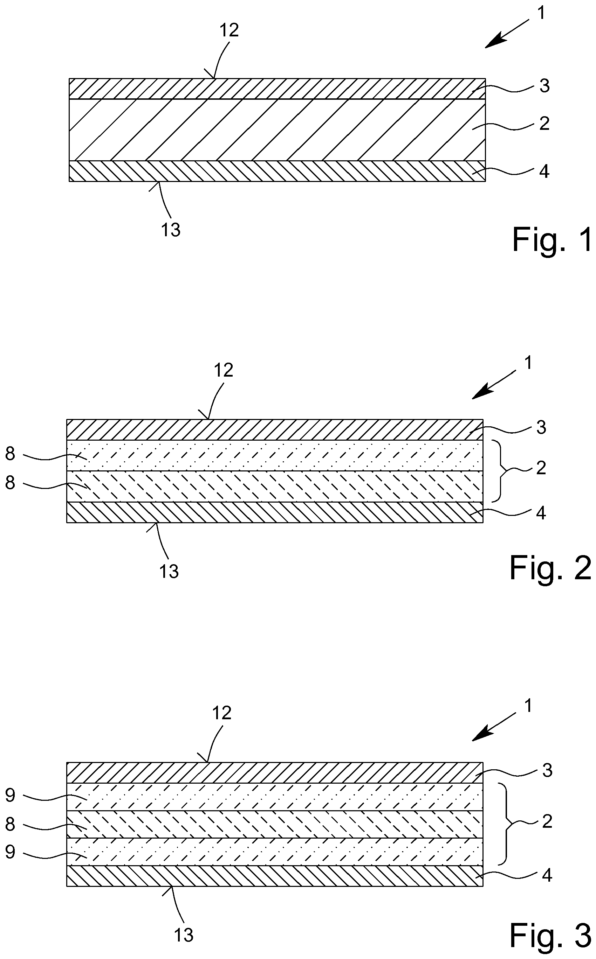

Fig. 1 zeigt eine Verbundfolie 1 mit einer äußeren Schutzschicht 3 und einer inneren Schutzschicht 4. Zwischen der äußeren Schutzschicht 3 und der inneren Schutzschicht 4 ist eine Funktionsschicht 2 angeordnet. Die dargestellte Verbundfolie 1 ist für den Einsatz in der Bauwirtschaft und zur Verwendung als Baufolie vorgesehen, insbesondere zur Gebäudeabdeckung und/oder zur Verwendung als Dachbahn.

Die in Fig. 1 dargestellte Funktionsschicht 2 ist als wenigstens einlagige Membranschicht ausgebildet. Die äußere Schutzschicht 3 ist als Polyolefin, insbesondere Polypropylen (PP), aufweisende Vliesschicht und die innere Schutzschicht 4 ist als Polyester, insbesondere Polyethylenterephthalat (PET), ausgebildet.

Insbesondere kann die äußere Schutzschicht 3 und/oder die innere Schutzschicht 4 mit der Funktionsschicht 2 fest verbunden und/oder vollflächig verklebt sein.

Sofern die Verbundfolie 1 zum Witterungsschutz von Gütern eingesetzt wird, kann die Oberseite 12 der Witterungsseite bzw. der Witterung zugewandt sein, wobei die Unterseite 13 beispielsweise dem Inneren eines Gebäudes zugewandt sein kann. Die Oberseite 12 ist auf der Außenseite der äußeren Schutzschicht 3 angeordnet. Die Unterseite 13 ist auf der gegenüberliegenden Außenseite der Verbundfolie 1 vorgesehen. Grundsätzlich ist es auch möglich, die Verbundfolie 1 nicht der Witterung auszusetzen, wobei die Unterseite 13 dann dem abzudeckenden Gut, Material oder dergleichen zugewandt sein kann.

Die in Fig. 1 dargestellte Funktionsschicht 2 ist als monolithische Membranschicht ausgebildet. Unter einer monolithischen Membranschicht wird eine selektiv durchlässige Membranschicht verstanden, die porenfrei bzw. geschlossenzellig ausgebildet ist.

Die Funktionsschicht 2 weist als Material Kunststoff und/oder Kunstharz auf. Insbesondere ist ein elastomeres Material und/oder ein thermoplastisches Material vorgesehen. In dem in Fig. 1 dargestellten Ausführungsbeispiel weist die Funktionsschicht 2 einen Polyurethankunststoff auf. Als Polyurethankunststoff der Funktionsschicht 2 ist in dem dargestellten Ausführungsbeispiel ein thermoplastisches Polyurethan (TPU), insbesondere mit hoher Wasseraufnahme und/oder Wasserdampfdiffusionsdurchlässigkeit, vorgesehen. In weiteren Ausführungsformen kann die Funktionsschicht 2 das thermoplastische Polyurethan nicht nur aufweisen, sondern auch daraus bestehen.

Zudem weist die in Fig. 1 dargestellte Funktionsschicht 2 ein Flächengewicht bzw. eine Grammatur von kleiner als 100 g/m² auf. Insbesondere liegt das Flächengewicht der Funktionsschicht 2 zwischen 5 g/m² bis 25 g/m².

Fig. 2 zeigt, dass die Funktionsschicht 2 wenigstens zwei Lagen von Membranschichten - das heißt zwei Membranschichtlagen 8 - aufweist. In dem dargestellten Ausführungsbeispiel sind die Membranschichtlagen 8 unterschiedlich voneinander ausgebildet und weisen insbesondere eine sich voneinander unterscheidende Materialzusammensetzung und/oder ein unterschiedliches Flächengewicht auf.

Insbesondere sind die Membranschichtlagen 8 fest miteinander verbunden, vorzugsweise über eine vollflächige Verklebung.

Fig. 3 zeigt, dass die Funktionsschicht 2 einen dreischichtigen Aufbau aus drei Membranschichtlagen 8 aufweist. In dem dargestellten Ausführungsbeispiel sind die außenseitigen Membranschichtlagen 9 identisch ausgebildet und schließen eine eine andere Materialzusammensetzung aufweisende mittige Membranschichtlage 8 ein bzw. umgeben eine mittige Membranschichtlage 8. Die identische Ausbildung der außenseitigen Membranschichtlagen 9 ist derart zu verstehen, dass diese die zumindest im Wesentlichen die gleiche Materialzusammensetzung, das gleiche Material und/oder die gleichen Materialeigenschaften aufweisen. Insbesondere sind die außenseitigen Membranschichtlagen 9 funktionsgleich ausgebildet. In einem weiteren, nicht dargestellten Ausführungsbeispiel kann vorgesehen sein, dass sich die Membranschichtlagen 8 voneinander unterscheiden, so dass auch die außenseitigen Membranschichtlagen 9 unterschiedlich voneinander ausgebildet sind.

In einem nicht dargestellten Ausführungsbeispiel sind die außenseitigen Membranschichtlagen 9 identisch. Weiter kann vorgesehen sein, dass die Oberseite 12 und die Unterseite 13 funktionsgleich ausgebildet sind, insbesondere wobei die äußere Schutzschicht 3 funktionsgleich zu der inneren Schutzschicht 4 ausgebildet ist. Folglich kann in einem weiteren Ausführungsbeispiel sowohl die Oberseite 12 als auch die Unterseite 13 als die der Witterungsseite zugewandte Seite der Verbundfolie 1 ausgebildet sein.

Bei einem weiteren nicht dargestellten Ausführungsbeispiel ist die Verbundfolie 1 symmetrisch aufgebaut.

Als außenseitige Membranschichtlage 9 ist diejenige Membranschichtlage 8 zu verstehen, die der äußeren Schutzschicht 3 oder der inneren Schutzschicht 4 unmittelbar zugewandt ist.

Die in Fig. 3 dargestellte Funktionsschicht 2 ist derart ausgebildet, dass wenigstens eine Membranschichtlage 8 als Material thermoplastisches Copolyester (TPEE) und/oder thermoplastisches Polyurethan (TPU) aufweist und/oder daraus besteht. Insbesondere weist die außenseitige Membranschichtlage 9 thermoplastisches Copolyester und/oder thermoplastisches Polyurethan auf. In einem weiteren, nicht dargestellten Ausführungsbeispiel ist die Funktionsschicht 2 aus TPEE-Schichten und/oder TPU-Schichten ausgebildet, wobei die Schichten fest miteinander verbunden sein können.

Nicht dargestellt ist, dass wenigstens eine außenseitige Membranschichtlage 9 und/oder die innere Membranschichtlage 8 der mehrlagigen Funktionsschicht 2 ein geschäumtes Polymer aufweist und/oder daraus ausgebildet ist. Die das geschäumte Polymer aufweisende außenseitige Membranschichtlage 9 kann durch Verkrallung mit der ihr zugewandten Schutzschicht - das heißt entweder der äußeren Schutzschicht 3 oder der inneren Schutzschicht 4 - verbunden sein. Insbesondere dringt die das geschäumte Polymer aufweisende außenseitige Membranschichtlage 9 in den Oberflächenbereich bzw. die äußerste Oberflächenschicht der äußeren Schutzschicht 3 und/oder der inneren Schutzschicht 4 ein. Die Verkrallung kann aufgrund des Herstellungsprozesses der Verbundfolie 1 erreicht werden, insbesondere bedingt durch die aufgrund der Aufschäumung der außenseitigen Membranschichtlage 9 hervorgerufene verlangsamte Abkühlung. Des Weiteren ist die außenseitige Membranschichtlage 9 auch fest mit der unmittelbar benachbarten Membranschichtlage 8 verbunden, wobei diese Verbindung ebenfalls durch Verkrallung hervorgerufen werden kann.

Nicht dargestellt ist, dass das Material der Funktionsschicht 2, insbesondere das thermoplastische Polyurethan, einen Anteil von wenigstens 10 %, in weiteren Ausführungsformen von 15 % bis 100 %, an aus nachwachsenden Rohstoffen stammenden Material aufweist.

Ferner zeigt Fig. 3, dass die äußere Schutzschicht 3 als eine Polypropylen aufweisende Vliesschicht ausgebildet ist. Insbesondere ist die äußere Schutzschicht 3 als eine Polypropylen-Nadelvliesschicht - das heißt eine durch Vernadelung verfestigte Vliesschicht - ausgebildet. In weiteren, nicht dargestellten Ausführungsformen kann zusätzlich oder alternativ die innenseitige Schutzschicht 4 als eine PET aufweisende und/oder daraus bestehende Vliesschicht, insbesondere eine PET-Nadelvliesschicht, ausgebildet sein.

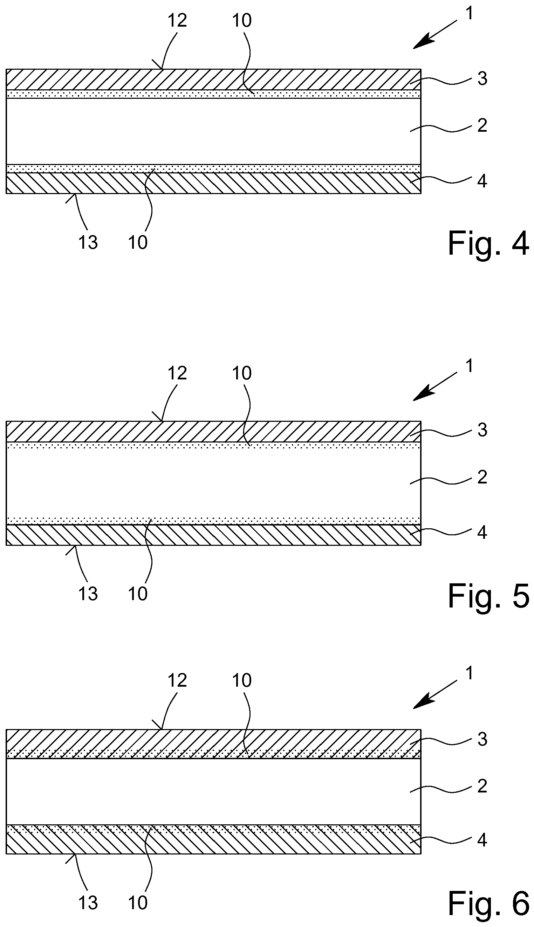

Fig. 4 zeigt, dass die äußere Schutzschicht 3 und die innere Schutzschicht 4 als Spinnvliesschicht ausgebildet sind. In weiteren Ausführungsformen, die nicht dargestellt sind, kann entweder die äußere Schutzschicht 3 oder die innere Schutzschicht 4 als Spinnvliesschicht ausgebildet sein.

Bei den in Fig. 1 bis 5 dargestellten Ausführungsformen weisen die äußere Schutzschicht 3 und die innere Schutzschicht 4 ein Flächengewicht von kleiner als 250 g/m²auf. Insbesondere liegt das Flächengewicht der äußeren Schutzschicht 3 und/oder der inneren Schutzschicht 4 zwischen 30 g/m² und 100 g/m².

Grundsätzlich können zur Verfestigung der äußeren Schutzschicht 3 und der inneren Schutzschicht 4 verschiedene Verfestigungsmethoden, wie eine mechanische, chemische und/oder thermische Verfestigung, vorgesehen sein. Fig. 5 zeigt eine thermisch verfestigte äußere Schutzschicht 3.

Fig. 4 zeigt, dass die Funktionsschicht 2 mit der äußeren Schutzschicht 3 und der inneren Schutzschicht 4 fest verbunden ist. Die feste Verbindung der Funktionsschicht 2 zu den Schutzschichten 3, 4 ist vollflächig über die Verbindungsoberflächen vorgesehen. In weiteren Ausführungsformen kann auch eine teilflächige Verbindung der Funktionsschicht 2 zu der äußeren Schutzschicht 3 und/oder der inneren Schutzschicht 4 vorgesehen sein. Zudem zeigt Fig. 4, dass die Funktionsschicht 2 sowohl mit der äußeren Schutzschicht 3 als auch mit der inneren Schutzschicht 4 verklebt ist. Die Verbindung und/oder Kleberschicht und/oder Haftvermittlerschicht 10 bzw. Verbindungsschicht ist insbesondere derart ausgebildet, dass die Verbundfolie diffusionsoffen ist bzw. bleibt, insbesondere wobei ein sehr dünner Kleberschichtauftrag und/oder ein Rasterauftrag des Klebers erfolgt.

In einem weiteren nicht dargestellten Ausführungsbeispiel ist zumindest teilflächig, vorzugsweise vollflächig, auf der der äußeren Schutzschicht 3 zugewandten Verbindungsfläche der Funktionsschicht 2 eine Kleberschicht und/oder Haftvermittlerschicht 10 bzw. Verbindungsschicht vorgesehen, insbesondere wobei auf der der inneren Schutzschicht 4 zugewandten Verbindungsfläche der Funktionsschicht 2 keine Haftvermittlerschicht 10 vorgesehen ist.

Zur Verklebung der Funktionsschicht 2 mit den Schutzschichten 3, 4 ist eine Haftvermittlerschicht 10 vorgesehen, die ein Haftvermittlerpolymer aufweist. Die Fig. 4 bis 6 zeigen die unterschiedliche Anordnung der Haftvermittlerschicht 10. So kann die Haftvermittlerschicht 10 - wie in Fig. 5 - dargestellt, als Teil der Funktionsschicht 2 ausgebildet sein bzw. das Haftvermittlerpolymer dringt zumindest bereichsweise in die den Schutzschichten 3, 4 zugewandten Oberflächen der Funktionsschicht 2 ein.

Fig. 4 zeigt, dass die Haftvermittlerschicht 10 als eine zwischen der Funktionsschicht 2 und den Schutzschichten 3, 4 vorgesehene separate Schicht ausgebildet ist. Diese Haftvermittlerschicht 10 kann während des Herstellungsverfahrens der Verbundfolie 1 auf die Schutzschichten 3, 4 und/oder auf die Funktionsschicht 2 aufgetragen werden.

Fig. 6 zeigt wiederum, dass die Haftvermittlerschicht 10 als Teil der Schutzschichten 3, 4 ausgebildet ist. So zeigt Fig. 6, dass das Haftvermittlerpolymer in die der Funktionsschicht 2 zugewandten Oberflächenbereichen der Schutzschichten 3, 4 eingedrungen ist.

Insbesondere ist die Haftvermittlerschicht 10 als Bestandteil der Schutzschicht oder Schutzschichten 3, 4 vorgesehen. Die Haftvermittlerschicht 10 ist fest mit der Funktionsschicht 2 oder den Schutzschichten 3, 4, insbesondere vollflächig, verbunden. Als Haftvermittlerpolymer bzw. als Material der Haftvermittlerschicht 10 kann ein Kunststoff und/oder ein Kunstharz, vorzugsweise Polyurethan, vorgesehen sein.

Die in Fig. 6 dargestellte Verbundfolie 1 ist wasserdampfdurchlässig, diffusionsoffen und regensicher ausgebildet. In weiteren Ausführungsformen kann die Verbundfolie 1 wasserdampfdurchlässig, diffusionsoffen, winddicht, regensicher, wasserabweisend und/oder wasserdicht ausgebildet sein. Die in Fig. 6 dargestellte Verbundfolie 1 weist einen S_{d}-Wert von kleiner oder gleich 0,5 m auf. In weiteren Ausführungsformen kann der S_{d}-Wert der Verbundfolie 1 zwischen 0,01 m bis 0,1 m liegen. Der S_{d}-Wert der Verbundfolie 1 ist derart ausgebildet, dass die diffusionsoffenen Eigenschaften der Verbundfolie 1 bzw. der Funktionsschicht 2 hinreichend gewährleistet werden können.

Darüber hinaus weist die Verbundfolie 1 bei dem in Fig. 6 dargestellten Ausführungsbeispiel eine Reißfestigkeit von größer als 50 N/mm auf. In weiteren Ausführungsformen kann die Reißfestigkeit der Verbundfolie 1 zwischen 100 N/mm bis 300 N/mm liegen. Die Weiterreißfestigkeit der Verbundfolie 1 ist in dem in Fig. 6 dargestellten Ausführungsbeispiel größer als 50 N/mm. In weiteren, nicht dargestellten Ausführungsbeispielen liegt die Weiterreißfestigkeit der Verbundfolie 1 zwischen 100 N/mm bis 300 N/mm.

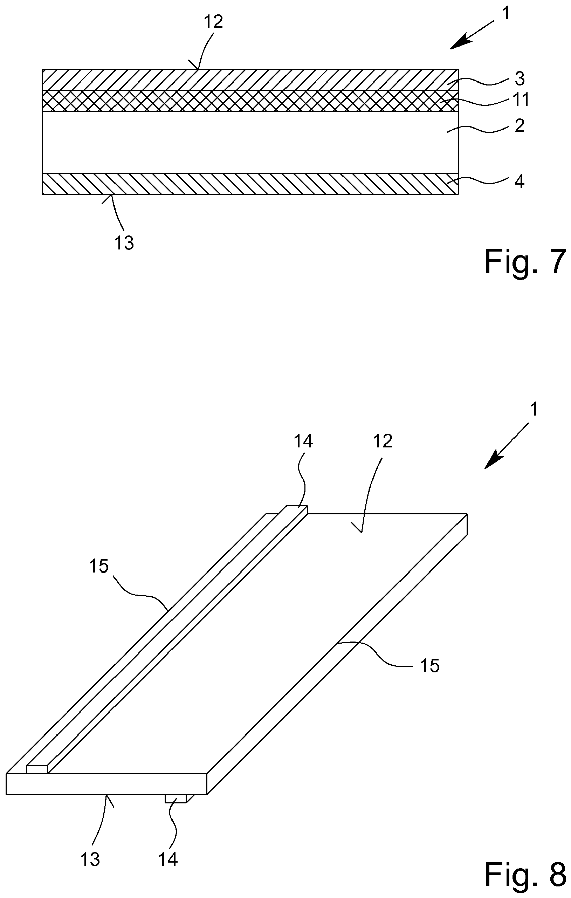

Fig. 7 zeigt, dass in dem Schichtaufbau der Verbundfolie 1 eine Verstärkungsschicht 11 eingebracht ist. Die Verstärkungsschicht 11 ist in dem dargestellten Ausführungsbeispiel zwischen der äußeren Schutzschicht 3 und der Funktionsschicht 2 angeordnet. In weiteren, nicht dargestellten Ausführungsbeispielen kann die Verstärkungsschicht 11 zwischen der inneren Schutzschicht 4 und der Funktionsschicht 2 angeordnet sein. Die Verstärkungsschicht 11 ist als Drehergewebe ausgebildet. Des Weiteren kann die Verstärkungsschicht 11 als Material Kunststoff und/oder Kunstharz aufweisen und/oder daraus bestehen. Insbesondere weist die Verstärkungsschicht 11 ein Kunststoffpolymer, wie Polypropylen (PP) und/oder Polyethylenterephthalat (PET), auf und/oder besteht daraus.

Die Fig. 8 bis 10 zeigen, dass die Verbundfolie 1 wenigstens eine längsrandseitige Klebezone 14 aufweist. Die längsrandseitige Klebezone 14 ist auf der Oberseite 12 und/oder auf der Unterseite 13 der Verbundfolie 1 vorgesehen. Fig. 8 zeigt, dass die längsrandseitige Klebezone 14 vom Längsrand 15 der Verbundfolie 1 beabstandet ist.

Nicht dargestellt ist, dass die Klebezone 14 streifenförmig ausgebildet ist. Ferner ist nicht dargestellt, dass die Klebezone 14 auch als unterbrochene Streifen ausgebildet sein kann.

Die Breite der Klebezone 14 beträgt in dem dargestellten Ausführungsbeispiel zwischen 2 bis 10 cm.

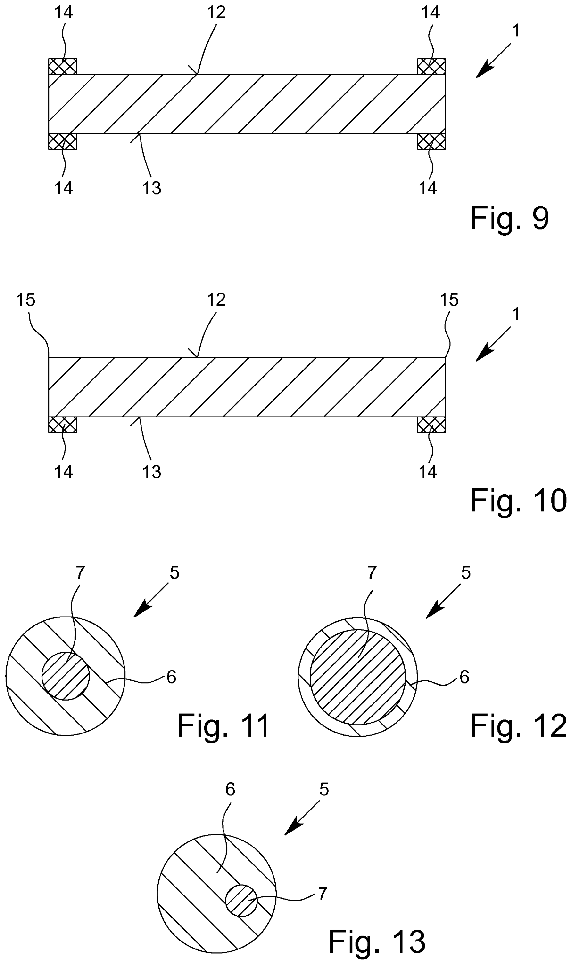

Fig. 8 zeigt, dass jeweils eine Klebezone 14 auf der Oberseite 12 und auf der Unterseite 13 vorgesehen ist. Fig. 9 zeigt, dass jeweils zwei längsrandseitige Klebezonen 14 sowohl auf der Unterseite 13 als auch auf der Oberseite 12 der Verbundfolie 1 vorgesehen ist. Fig. 10 zeigt, dass zwei längsrandseitige Klebezonen 14 auf der Unterseite 13 vorgesehen sind.

In Fig. 8 ist die Klebezone 14 in einem Längsrandbereich, der den Längsrand 15 umfasst, der Oberseite 12 und der Unterseite 13 der Verbundfolie 1 angeordnet. Der Längsrandbereich erstreckt sich in dem in Fig. 8 dargestellten Ausführungsbeispiel ausgehend von dem Längsrand 15 der Verbundfolie 1 über bzw. größer als 1 % der Breite der Verbundfolie 1, in dem dargestellten Ausführungsbeispiel etwa über 15 % +/- 10 % der Breite der Verbundfolie 1. Die Fig. 8 bis 10 zeigen lediglich schematisch die Anordnung der Klebezonen 14 und dienen nicht zum Rückschluss für die Abmessungen für die Längen oder Breiten der Klebezone 14.

Die in den dargestellten Ausführungsbeispielen gezeigten Klebezonen 14 sind derart ausgebildet, dass bei Verklebung benachbarter Verbundfolien 1 eine winddichte und/oder luftdichte Verklebung erfolgt.

Die in Fig. 8 gezeigte Versetzung der Klebezonen 14 ist derart gewählt, dass bei Verklebung benachbarter Verbundfolien 1 eine Kleber-in-Kleber-Verbindung zwischen den Klebezonen 14 benachbarter Reihen der Verbundfolie 1 entsteht. Bei der verlegten Verbundfolie 1 ist vorgesehen, dass die Klebezonen 14 zumindest bereichsweise übereinander angeordnet sind, so dass eine stoffschlüssige Verbindung zwischen den Klebern der Klebezonen 14 hervorgerufen wird. Letztlich kann vorgesehen sein, dass für unterschiedliche Klebezonen 14 unterschiedliche Kleber und/oder Klebereigenschaften, wie Grammatur und/oder Breite des Kleberauftrags, vorgesehen sind, wobei bevorzugt ist, dass die Klebezonen 14 hinsichtlich des verwendeten Klebers und aller Klebereigenschaften identisch sind.

Nicht dargestellt ist, dass die Gegenfläche für die den Kleber aufweisende Klebezone 14 mit einem Liner abgedeckt und/oder oberflächenbehandelt ist. Insbesondere ist nicht dargestellt, dass die Klebezone 14 durch einen Lack abgedeckt sein kann. Der Liner kann zum Schutz der Klebezone 14, insbesondere vor Verunreinigungen und/oder vor Verschmutzungen, dienen.

In einem nicht dargestellten Ausführungsbeispiel weist die äußere Schutzschicht 3 und/oder die innere Schutzschicht 4 wenigstens eine Bikomponentenfaser 5 auf. Die Bikomponentenfaser 5 weist eine erste Komponente 6 und eine zweite Komponente 7 auf, wobei die erste Komponente 6 ein erstes Polymer und die zweite Komponente 7 ein zweites Polymer als Bestandteil aufweist. Das erste Polymer und das zweite Polymer können sich voneinander unterscheiden.

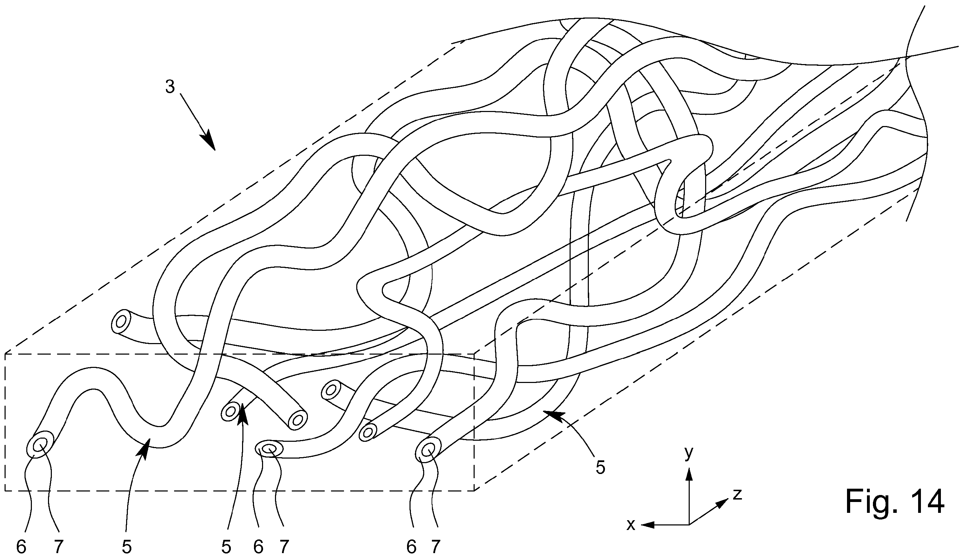

Fig. 14 zeigt die als Spinnvliesschicht ausgebildete äußere Schutzschicht 3, die zudem aus Bikomponentenfasern 5 mit jeweils einer ersten Komponente 6 und einer zweiten Komponente 7 aufgebaut ist.

Bei einer weiteren, nicht dargestellten Ausführungsform ist vorgesehen, dass das erste Polymer, insbesondere durch einen Ziegler-Natta-Katalysator polymerisiertes, Polypropylen und das zweite Polymer, insbesondere durch Metallocen-Katalysatoren hergestelltes, Polypropylen aufweist oder vice versa.

In weiteren Ausführungsbeispielen können sowohl die äußere Schutzschicht 3 als auch die innere Schutzschicht 4 als eine Bikomponentenfasern 5 aufweisende Vliesschicht ausgebildet sein.

Darüber hinaus ist nicht dargestellt, dass es sich bei dem ersten Polymer und/oder dem zweiten Polymer um ein Polyolefin oder ein Polyolefin-Copolymer handelt, vorzugsweise um ein Polymer und/oder Copolymer des Ethylen, Propylen, Butylen, Hexen oder Octen und/oder eine Mischung und/oder einen Blend daraus, und/oder um ein Polyethylenterephthalat und/oder um ein Polyethylenterephthalat-Copolymer.

Bei einer weiteren nicht dargestellten Ausführungsform ist vorgesehen, dass, insbesondere bei der Bikomponentenfaser 5 der inneren Schutzschicht 4, als erstes Polymer Polyethylenterephthalat und als zweites Polymer Polyethylenterephthalat-Copolymer und/oder Polyethylen und/oder Polypropylen vorgesehen ist.

Weiter ist nicht dargestellt, dass die Bikompnentenfaser 5 bei einer Ausbildung als Kern-Mantel-Faser als Material für den Kern Polyactide (PLA) und/oder als Material für den Mantel Polyethylenterephthalat und/oder Polyethylenterephthalat-Copolymer aufweist. Alternativ oder zusätzlich ist nicht dargestellt, dass der Kern als Material Polyethylenfuranoat (PEF) aufweist und/oder der Mantel als Material Polyethylenterephthalat-Copolymer aufweist.

Die Fig. 11 bis 13 zeigen Querschnittsansichten beispielhafter erfindungsgemäßer Bikomponentenfasern 5. Die dargestellten Bikomponentenfasern 5 weisen jeweils eine erste Komponente 6 und eine zweite Komponente 7 auf. Bei den in Fig. 11 bis 13 dargestellten Kern-Mantel-Fasern umgibt dabei die erste Komponente 6 die zweite Komponente 7 und bildet so die äußere Oberfläche der Bikomponentenfaser 5. Dabei weisen die dargestellten Bikomponentenfasern 5 im Querschnitt eine, zumindest annähernd, kreisförmige bzw. -runde Geometrie auf. In weiteren, nicht dargestellten Ausführungsformen kann die Bikomponentenfaser 5 auch nicht kreisförmige Querschnitte, beispielsweise einen trilobalen Querschnitt oder andere multilobale Querschnitte, aufweisen. Bei einem sehr dünnen Mantel der Bikomponentenfaser 5, der die zweite Komponente 7 umgibt, kann es durchaus vorkommen, dass der Mantel Defekte aufweist. Das heißt, der Mantel umgibt den Kern nicht vollständig, sondern ist an einigen Stellen durchbrochen, so dass der Kern an diesen Stellen auch die äußere Oberfläche der Faser bildet. Auch bei derartigen Fasern handelt es sich um "Kern-Mantel-Fasern". Insbesondere bildet bei derartigen Fasern die den durchbrochenen Mantel bildende Komponente im Sinne der vorliegenden Erfindung die äußere Oberfläche der Faser.

Nicht dargestellt ist, dass die Bikomponentenfaser 5 auch als Side-by-Side-Faser ausgebildet sein kann. Side-by-Side-Fasern können dadurch charakterisiert sein, dass sowohl die erste Komponente 6 als auch die zweite Komponente 7 ein Teil der äußeren Oberfläche der Bikomponentenfaser 5 bilden. Auch bei Side-by-Side-Fasern sind kreisrunde oder zumindest annährend kreisrunde Querschnitte ebenso möglich wie multilobale Querschnitte. Abhängig davon, welche Fasereigenschaften bzw. Vlieseigenschaften erzielt werden sollen, können die erste Komponente 6 und die zweite Komponente 7 in unterschiedlichen Verhältnissen in unterschiedlicher räumlicher Anordnung zueinander kombiniert werden.

Ebenfalls nicht dargestellt ist, dass die Bikomponentenfaser 5 auch als Segmented-Pie-Faser ausgebildet sein kann. Diese Faserstruktur weist insofern eine Verwandtschaft zu den Side-by-Side-Faserstrukturen auf, als dass sowohl die erste Komponente 6 als auch die zweite Komponente 7 ein Teil der äußeren Oberfläche der Bikomponentenfaser 5 bilden kann.

Auch eine Ausbildung der Bikomponentenfaser 5 als Island-In-The-Sea-Struktur als Abwandlung einer Kern-Mantel-Faser ist in den dargestellten Ausführungsformen nicht vorgesehen. Bei einer Island-In-The-Sea-Struktur der Bikomponentenfaser 5 können eine Vielzahl von Kernen aus der zweiten Komponente 7 vorhanden sein. Die einzelnen Kerne aus der zweiten Komponente 7 sind von einem gemeinsamen Mantel aus der ersten Komponente 6 umgeben.

Weiterhin sind grundsätzlich Mischformen zwischen Kern-Mantel-Fasern und Side-by-Side-Fasern möglich.

In Fig. 14 ist dargestellt, wie eine Vielzahl beispielhafter Bikomponentenfasern 5 ein Spinnvlies bilden. Das Spinnvlies ist in dem dargestellten Ausführungsbeispiel als äußere Schutzschicht 3 ausgebildet. Auch die innere Schutzschicht 4 kann als ein in Fig. 14 dargestelltes Spinnvlies ausgebildet sein. Dabei bildet das Spinnvlies eine Bahn mit einer Querrichtung X einer Dickenrichtung Y und einer Längenrichtung Z, die auch als Maschinenrichtung bezeichnet wird.

Ein beispielhaftes Spinnvlies kann aus Bikomponentenfasern 5 hergestellt sein, die mittels eines Kalanders thermisch verfestigt wurden. Die Bikomponentenfasern 5 sind in dem dargestellten Ausführungsbeispiel als Kern-Mantel-Fasern mit einem Mantel aus der ersten Komponente 6 mit Polypropylen als ersten Polymer mit einem Kern aus der zweiten Komponente 7 mit einem Polypropylen als zweiten Polymer. Das Flächengewicht des in Fig. 14 dargestellten Spinnvlieses kann 70 g/m² +/- 20 g/m² betragen.

Nicht dargestellt ist, dass die Differenz des Schmelzpunktes der ersten Komponente 6 und der zweiten Komponente 7 kleiner oder gleich 8 °C ist. Insbesondere kann die Differenz der Schmelzpunkte der ersten Komponente 6 und der zweiten Komponente 7 zwischen 1 °C bis 6 °C liegen.

Ferner ist nicht dargestellt, dass der Melt-Flow-Indices der ersten Komponente 6 und der zweiten Komponente 7 kleiner oder gleich 25 g/10 min ist. Zudem kann der Melt-Flow-Indices der ersten Komponente 6 und der zweiten Komponente 7 jeweils kleiner oder gleich 50 g/10 min ausgebildet sein.

Insbesondere kann die Komponente mit der niedrigen Schmelzpunkt im Querschnitt der Bikomponentenfaser 5 die äußere Oberfläche der Bikomponentenfaser 5 bilden, wobei sie insbesondere die Komponente mit dem höheren Schmelzpunkt, vorzugsweise vollständig, umgibt.

Das Polymer einer der beiden Komponenten 6, 7 kann mit einem Metallocen-Katalysator polymerisiert worden sein. Das Polymer der anderen Komponente kann mit einem Ziegler-Natta-Katalysator polymerisiert sein und einer anschließenden Visbreaking-Behandlung unterzogen worden sein.

Darüber hinaus ist nicht dargestellt, dass die erste Komponente 6 ein Additiv aufweist, wobei der Massenanteil des Additivs in der zweiten Komponente 7 kleiner ist als in der ersten Komponenten 6, vorzugsweise höchstens 66,6 % beträgt.

Bei dem Additiv kann es sich um ein primäres oder sekundäres Antioxidanz, ein UV-Absorber, einen UV-Stabilisator, ein Flammhemmer, ein Antistatikum, ein Gleitmittel, einen Metalldesaktivator, ein Hydrophilierungsmittel, ein Hydrophobierungsmittel, ein Anti-Fogging-Additiv und/oder ein Biozid handeln.

Gegebenenfalls das Additiv kann ausgewählt sein aus der Gruppe von:
Sterisch gehinderte Phenolen, aromatischen sekundären oder tertiären Aminen, Aminophenolen, aromatischen Nitro- oder Nitrosoverbindungen, Organischen Phosphiten oder Phosphonaten, Thioethern, Thioalkoholen, Thioestern, Sulfiden und schwefehaltigen organischen Säuren, Dithiocarbamaten, Thiodipropionaten, Aminopyrazolen, metallhaltigen Chelaten, Mercaptobenzimidazolen, Hydroxybenzophenonen, Cinnamaten, Oxalaniliden, Salicylaten, Resorcinol Monobenzoaten, Benzotriazolen, Triazinen, Benzophenonen, Titandioxid, Ruß, metallhaltigen Komplexen organischer Schwefel- oder Phosphorverbindungen, sterisch gehinderten Aminen (HALS), Metallhydroxiden, Boraten, organischen brom- oder chlorhaltigen Verbindungen, organischen Phosphorverbindungen, Antimontrixoid, Melamin, Melamincyanurat, Blähgraphit oder anderen Intumeszenz-Systemen, Quartären Ammoniumsalzen, Alkylsulfonaten, Alkylsulfaten, Alkylphosphaten, Dithiocarbamaten, (Erd)Alkalimetallcarboxylaten, Polyethylenglykolen sowie deren Ester und Ether, Ethoxylaten, Mono- und Diglyceriden, Fettalkoholen, Ester von Fettalkoholen, Fettsäuren, Fettsäureestern, Dicarbonsäureestern, Fettsäureamiden, Metallsalzen von Fettsäuren, Polyolefinwachsen, natürlichen oder künstlichen Paraffinen und deren Derivaten, Fluorpolymeren und Fluoroligomeren, Antiblockmitteln wie Kieselsäuren, Silikonen, Silikaten, Calciumcarbonat, Amiden von Mono- und Dicarbonsäuren und deren Derivaten, zyklischen Amiden, Hydrazonen und Bishydrazonen, Hydraziden, Hydrazinen, Melamin und dessen Derivaten, Benzotriazolen, Aminotriazolen, sterisch gehinderten Phenolen in Verbindung mit komplexierenden Metallverbindungen, Benzylphosphonaten, Pyridithiolen, Thiobisphenolestern, Polyglycolen, Ethoxylaten, Fluorpolymeren und Fluoroligomeren Montanwachsen, insbesondere Stearaten, 10,10'-Oxybisphenoxarsin (OBPA), N-(Trihalogen-methylthiol)phthalimid, Tributylzinnoxid, Zinkdimethyldithiocarbamat, Diphenylantimon-2-ethylhexanoat, Kupfer-8-hydroxychinolin, Isothiazolonen, Silber und Silbersalzen als Bioziden oder Mischungen daraus.

Der Massenanteil der Komponente mit dem niedrigen Schmelzpunkt an der Bikomponentenfaser 5 kann höchstens 50 % betragen.

### Bezugszeichenliste:

- 1: Verbundfolie
- 2: Funktionsschicht
- 3: äußere Schutzschicht
- 4: innere Schutzschicht
- 5: Bikomponentenfaser
- 6: erste Komponente
- 7: zweite Komponente
- 8: Membranschichtlage
- 9: außenseitige Membranschichtlage
- 10: Haftvermittlerschicht
- 11: Verstärkungsschicht
- 12: Oberseite
- 13: Unterseite
- 14: Klebezone
- 15: Längsrand

## Patentansprüche

1. Verbundfolie (1), vorzugsweise vorgesehen für den Einsatz in der Bauwirtschaft und/oder vorzugsweise zur Verwendung als Baufolie, mit wenigstens einer Funktionsschicht (2), wenigstens einer, vorzugsweise im verlegten Zustand der Witterungsseite zugewandten, äußeren Schutzschicht (3) und wenigstens einer inneren Schutzschicht (4), wobei die Funktionsschicht (2) zwischen der äußeren Schutzschicht (3) und der inneren Schutzschicht (4) angeordnet ist,
**dadurch gekennzeichnet,**
**dass** die Funktionsschicht (2) als wenigstens einlagige Membranschicht ausgebildet ist, dass die äußere Schutzschicht (3) als eine Polyolefin aufweisende Vliesschicht und die innere Schutzschicht (4) als eine Polyester aufweisende Vliesschicht ausgebildet sind, dass die Funktionsschicht (2) als monolithische Membranschicht ausgebildet ist, dass die Funktionsschicht (2) als Material thermoplastisches Polyurethan (TPU) aufweist und/oder daraus besteht und dass die äußere Schutzschicht (3) und die innere Schutzschicht (4) als Spinnvliesschicht und/oder als Nadelvliesschicht ausgebildet sind.

2. Verbundfolie nach Anspruch 1, **dadurch gekennzeichnet, dass** die Funktionsschicht (2) ein Flächengewicht von kleiner als 100 g/m², bevorzugt zwischen 1 g/m² bis 70 g/m², weiter bevorzugt zwischen 3 g/m² bis 40 g/m², vorzugsweise zwischen 4 g/m² bis 30 g/m² und insbesondere zwischen 5 g/m² bis 25 g/m², aufweist.

3. Verbundfolie nach Anspruch 1 oder 2, **dadurch gekennzeichnet, dass** die Funktionsschicht (2) wenigstens zwei Lagen von Membranschichten aufweist.

4. Verbundfolie nach einem der vorhergehenden Ansprüche, **dadurch gekennzeichnet, dass** wenigstens eine Membranschichtlage (8) der Funktionsschicht (2), insbesondere eine außenseitige, vorzugsweise der äußeren Schutzschicht (3) und/oder inneren Schutzschicht (4) zugewandte, Membranschichtlage (8), als Material thermoplastisches Copolyester (TPEE) und/oder thermoplastisches Polyurethan (TPU) aufweist.

5. Verbundfolie nach einem der vorhergehenden Ansprüche, **dadurch gekennzeichnet, dass** wenigstens eine außenseitige Membranschichtlage (9) und/oder eine innere Membranschichtlage (8) der mehrlagigen Funktionsschicht (2) ein geschäumtes Polymer aufweist und/oder daraus besteht, insbesondere wobei die das geschäumte Polymer aufweisende außenseitige Membranschichtlage (9) der Funktionsschicht (2) mit der äußeren und/oder inneren Schutzschicht (3, 4) durch Verkrallung verbunden ist.

6. Verbundfolie nach einem der vorhergehenden Ansprüche, **dadurch gekennzeichnet, dass** das Material der Funktionsschicht (2), insbesondere das thermoplastische Polyurethan, einen Anteil von wenigstens 10 %, bevorzugt von 15 % bis 100 %, weiter bevorzugt von 20 % bis 70 %, an aus nachwachsenden Rohstoffen stammenden Material aufweist.

7. Verbundfolie nach einem der vorhergehenden Ansprüche, **dadurch gekennzeichnet, dass** das Flächengewicht der äußeren Schutzschicht (3) und/oder der inneren Schutzschicht (4) kleiner oder gleich 250 g/m² ist, bevorzugt zwischen 1 g/m² bis 250 g/m², weiter bevorzugt zwischen 10 g/m² und 150 g/m², vorzugsweise zwischen 20 g/m² bis 120 g/m² und insbesondere zwischen 30 g/m² und 100 g/m², liegt.

8. Verbundfolie nach einem der vorhergehenden Ansprüche, **dadurch gekennzeichnet, dass** äußere Schutzschicht (3) und/oder innere Schutzschicht (4) als mechanisch, chemisch und/oder thermisch, vorzugsweise thermisch, verfestigte Vliesschicht ausgebildet ist.

9. Verbundfolie nach einem der vorhergehenden Ansprüche, **dadurch gekennzeichnet, dass** die Funktionsschicht (2) mit der äußeren Schutzschicht (3) und/oder der inneren Schutzschicht (4) fest verbunden, vorzugsweise verklebt, ist.

10. Verbundfolie nach einem der vorhergehenden Ansprüche, **dadurch gekennzeichnet, dass** die äußere Schutzschicht (3) und/oder die innere Schutzschicht (4) und/oder die Funktionsschicht (2), insbesondere außenseitig, eine, vorzugsweise ein Polymer aufweisende, Haftvermittlerschicht (10) aufweist, insbesondere wobei die Haftvermittlerschicht (10) fest mit der Funktionsschicht (2) verbunden ist und/oder wobei die Haftvermittlerschicht (10) einen Kunststoff und/oder Kunstharz, vorzugsweise Polyurethan, aufweist.

11. Verbundfolie nach einem der vorhergehenden Ansprüche, **dadurch gekennzeichnet, dass** die Verbundfolie (1) wasserdampfdurchlässig, diffusionsoffen, winddicht, regensicher und/oder wasserabweisend und/oder wasserdicht ausgebildet ist.

12. Verbundfolie (1) nach einem der vorhergehenden Ansprüche, **dadurch gekennzeichnet, dass** die Reißfestigkeit der Verbundfolie (1) größer als 50 N/mm ist, bevorzugt zwischen 50 N/mm bis 600 N/mm, weiter bevorzugt zwischen 100 N/mm bis 400 N/mm, liegt, und/oder dass die Weiterreißfestigkeit der Verbundfolie (1) größer als 50 N/mm ist, bevorzugt zwischen 50 N/mm und 500 N/mm, weiter bevorzugt zwischen 100 N/mm bis 300 N/mm, liegt.

13. Verbundfolie nach einem der vorhergehenden Ansprüche, **dadurch gekennzeichnet, dass** wenigstens eine Verstärkungsschicht (11) zwischen der Funktionsschicht (2) und der äußeren Schutzschicht (3) und/oder der inneren Schutzschicht (4) angeordnet ist, wobei die Verstärkungsschicht (11) als Drehergewebe ausgebildet ist, insbesondere wobei die Verstärkungsschicht (11) ein Kunststoff und/oder Kunstharz, vorzugsweise ein Kunststoffpolymer, insbesondere Polypropylen (PP) und/oder Polyethylenterephthalat (PET), aufweist und/oder daraus besteht.

14. Verbundfolie nach einem der vorhergehenden Ansprüche, **dadurch gekennzeichnet, dass** auf der Oberseite (12) und/oder der Unterseite (13) der Verbundfolie (1) wenigstens eine längsrandseitige Klebezone (14) vorgesehen ist, insbesondere wobei die längsrandseitige Klebezone (14) vom Längsrand (15) der Verbundfolie (1) beabstandet ist und/oder wobei die Klebezone (14) streifenförmig, gegebenenfalls als unterbrochene Streifen, ausgebildet ist und/oder wobei die Klebezone (14) eine Breite zwischen 2 bis 10 cm aufweist.

15. Verbundfolie nach einem der vorhergehenden Ansprüche, **dadurch gekennzeichnet, dass** die äußere Schutzschicht (3) und/oder die innere Schutzschicht (4) wenigstens eine Bikomponentenfaser (5) mit einer ersten Komponenten (6) und einer zweiten Komponente (7) aufweist, wobei die erste Komponente (6) ein erstes Polymer und die zweite Komponente (7) ein zweites Polymer als Bestandteil aufweist.

## Claims

1. Composite film (1), preferably intended for use in the construction industry and/or preferably for use as a construction film, having at least one functional layer (2), at least one outer protective layer (3), preferably facing the weather side in the laid state, and at least one inner protective layer (4), the functional layer (2) being arranged between the outer protective layer (3) and the inner protective layer (4), **characterized in that**
the functional layer (2) is designed as at least a single-layer membrane layer, **in that** the outer protective layer (3) is designed as a nonwoven layer comprising polyolefin and the inner protective layer (4) is designed as a nonwoven layer comprising polyester, **in that** the functional layer (2) is designed as a monolithic membrane layer, **in that** the functional layer (2) comprises as material thermoplastic polyurethane (TPU) and/or consists thereof, and **in that** the outer protective layer (3) and the inner protective layer (4) are designed as a spunbonded layer and/or as a needled nonwoven layer.

2. Composite film according to claim 1, **characterized in that** the functional layer (2) has a grammage of less than 100 g/m², preferably between 1 g/m² to 70 g/m², more preferably between 3 g/m² to 40 g/m², preferably between 4 g/m² to 30 g/m² and in particular between 5 g/m² to 25 g/m².

3. Composite film according to claim 1 or 2, **characterized in that** the functional layer (2) comprises at least two layers of membrane layers.

4. Composite film according to one of the preceding claims, **characterized in that** at least one membrane layer (8) of the functional layer (2), in particular an outer membrane layer (8), preferably facing the outer protective layer (3) and/or inner protective layer (4), has thermoplastic copolyester (TPEE) and/or thermoplastic polyurethane (TPU) as material.

5. Composite film according to one of the preceding claims, **characterized in that** at least one outer membrane layer (9) and/or one inner membrane layer (8) of the multilayer functional layer (2) comprises and/or consists of a foamed polymer, in particular wherein the outer membrane layer (9) of the functional layer (2) comprising the foamed polymer is bonded to the outer and/or inner protective layer (3, 4) by means of interlocking.

6. Composite film according to one of the preceding claims, **characterized in that** the material of the functional layer (2), in particular the thermoplastic polyurethane, has a proportion of at least 10%, preferably from 15% to 100%, more preferably from 20% to 70%, of material derived from renewable raw materials.

7. Composite film according to one of the preceding claims, **characterized in that** the grammage of the outer protective layer (3) and/or of the inner protective layer (4) is less than or equal to 250 g/m², preferably between 1 g/m² and 250 g/m², more preferably between 10 g/m² and 150 g/m², preferably between 20 g/m² and 120 g/m², and in particular between 30 g/m² and 100 g/m².

8. Composite film according to one of the preceding claims, **characterized in that** outer protective layer (3) and/or inner protective layer (4) is formed as a mechanically, chemically and/or thermally, preferably thermally, consolidated nonwoven layer.

9. Composite film according to one of the preceding claims, **characterized in that** the functional layer (2) is firmly bonded, preferably glued, to the outer protective layer (3) and/or the inner protective layer (4).

10. Composite film according to one of the preceding claims, **characterized in that** the outer protective layer (3) and/or the inner protective layer (4) and/or the functional layer (2) has, in particular on the outside, an adhesion-promoting layer (10), preferably comprising a polymer, in particular wherein the adhesion-promoting layer (10) is firmly bonded to the functional layer (2) and/or wherein the adhesion-promoting layer (10) comprises a plastic and/or synthetic resin, preferably polyurethane.

11. Composite film according to one of the preceding claims, **characterized in that** the composite film (1) is designed to be permeable to water vapour, open to diffusion, windproof, rainproof and/or water-repellent and/or waterproof.

12. Composite film (1) according to any one of the preceding claims, **characterized in that** the tear strength of the composite film (1) is greater than 50 N/mm, preferably between 50 N/mm to 600 N/mm, more preferably between 100 N/mm to 400 N/mm, and/or that the tear propagation strength of the composite film (1) is greater than 50 N/mm, preferably between 50 N/mm and 500 N/mm, more preferably between 100 N/mm to 300 N/mm.

13. Composite film according to one of the preceding claims, **characterized in that** at least one reinforcing layer (11) is arranged between the functional layer (2) and the outer protective layer (3) and/or the inner protective layer (4), the reinforcing layer (11) being in the form of a leno fabric, in particular the reinforcing layer (11) comprising and/or consisting of a plastic and/or synthetic resin, preferably a plastic polymer, in particular polypropylene (PP) and/or polyethylene terephthalate (PET).

14. Composite film according to one of the preceding claims, **characterized in that** at least one longitudinal-edge-side adhesive zone (14) is provided on the topside (12) and/or the underside (13) of the composite film (1), in particular the longitudinal-edge-side adhesive zone (14) being spaced apart from the longitudinal edge (15) of the composite film (1), and/or the adhesive zone (14) being in the form of strips, if appropriate as interrupted strips, and/or the adhesive zone (14) having a width of between 2 and 10 cm.

15. Composite film according to any one of the preceding claims, **characterized in that** the outer protective layer (3) and/or the inner protective layer (4) comprises at least one bicomponent fiber (5) having a first component (6) and a second component (7), the first component (6) comprising a first polymer and the second component (7) comprising a second polymer as a constituent.

## Revendications

1. Film composite (1), de préférence prévue pour l'utilisation dans l'industrie du bâtiment et/ou de préférence pour l'utilisation comme film de construction, avec au moins une couche fonctionnelle (2), au moins une couche de protection extérieure (3), de préférence tournée vers le côté des intempéries à l'état posé, et au moins une couche de protection intérieure (4), la couche fonctionnelle (2) étant disposée entre la couche de protection extérieure (3) et la couche de protection intérieure (4),
**caractérisé en ce que**
la couche fonctionnelle (2) est conçue comme une couche de membrane au moins monocouche, **en ce que** la couche de protection extérieure (3) est conçue comme une couche de non-tissé présentant une polyoléfine et **en ce que** la couche de protection intérieure (4) est conçue comme une couche de non-tissé présentant un polyester, **en ce que** la couche fonctionnelle (2) est réalisée sous la forme d'une couche de membrane monolithique, **en ce que** la couche fonctionnelle (2) présente comme matériau du polyuréthane thermoplastique (TPU) et/ou en est constituée, et **en ce que** la couche de protection extérieure (3) et la couche de protection intérieure (4) sont réalisées sous la forme d'une couche non tissée filée et/ou d'une couche non tissée aiguilletée.

2. Film composite selon la revendication 1, **caractérisée en ce que** la couche fonctionnelle (2) présente un grammage inférieur à 100 g/m², de préférence compris entre 1 g/m² et 70 g/m², plus préférentiellement entre 3 g/m² et 40 g/m², de préférence entre 4 g/m² et 30 g/m² et en particulier entre 5 g/m² et 25 g/m.²

3. Film composite selon la revendication 1 ou 2, **caractérisé en ce que** la couche fonctionnelle (2) comprend au moins deux strates de couches de membranes.

4. Film composite selon l'une des revendications précédentes, **caractérisé en ce qu'**au moins une strate de couche de membrane (8) de la couche fonctionnelle (2), en particulier une strate de couche de membrane (8) côté extérieur, de préférence tournée vers la couche de protection extérieure (3) et/ou la couche de protection intérieure (4), présente comme matériau un copolyester thermoplastique (TPEE) et/ou un polyuréthane thermoplastique (TPU).

5. Film composite selon l'une des revendications précédentes, **caractérisée en ce qu'**au moins une strate de couche de membrane extérieure (9) et/ou une strate de couche de membrane intérieure (8) de la couche fonctionnelle multicouche (2) présente et/ou est constituée d'un polymère expansé, en particulier dans lequel la strate de couche de membrane extérieure (9) de la couche fonctionnelle (2) présentant le polymère expansé est reliée à la couche de protection extérieure et/ou intérieure (3, 4) par encliquetage.

6. Film composite selon l'une des revendications précédentes, **caractérisé en ce que** le matériau de la couche fonctionnelle (2), en particulier le polyuréthane thermoplastique, présente une proportion d'au moins 10 %, de préférence de 15 % à 100 %, plus préférentiellement de 20 % à 70 %, de matériau issu de matières premières renouvelables.

7. Film composite selon l'une quelconque des revendications précédentes, **caractérisé en ce que** le grammage de la couche de protection externe (3) et/ou de la couche de protection interne (4) est inférieur ou égal à 250 g/m², de préférence compris entre 1 g/m² et 250 g/m², plus préférentiellement entre 10 g/m² et 150 g/m², de préférence entre 20 g/m² et 120 g/m² et notamment entre 30 g/m²et 100 g/m².

8. Film composite selon l'une des revendications précédentes, **caractérisé en ce que** la couche de protection extérieure (3) et/ou la couche de protection intérieure (4) est réalisée sous la forme d'une couche non tissée consolidée mécaniquement, chimiquement et/ou thermiquement, de préférence thermiquement.

9. Film composite selon l'une des revendications précédentes, **caractérisé en ce que** la couche fonctionnelle (2) est solidement reliée, de préférence collée, à la couche de protection extérieure (3) et/ou à la couche de protection intérieure (4).

10. Film composite selon l'une des revendications précédentes, **caractérisé en ce que** la couche de protection extérieure (3) et/ou la couche de protection intérieure (4) et/ou la couche fonctionnelle (2) présente, en particulier sur le côté extérieur, une couche d'agent adhésif (10), présentant de préférence un polymère, en particulier la couche d'agent adhésif (10) est reliée solidement à la couche fonctionnelle (2) et/ou où la couche d'agent adhésif (10) présente une matière plastique et/ou une résine synthétique, de préférence du polyuréthane.

11. Film composite selon l'une des revendications précédentes, **caractérisé en ce que** le film composite (1) est perméable à la vapeur d'eau, ouvert à la diffusion, étanche au vent, résistant à la pluie et/ou hydrofuge et/ou étanche à l'eau.

12. Film composite (1) selon l'une quelconque des revendications précédentes, **caractérisé en ce que** la résistance à la déchirure du film composite (1) est supérieure à 50 N/mm, de préférence comprise entre 50 N/mm et 600 N/mm, plus préférablement entre 100 N/mm et 400 N/mm, et/ou **en ce que** la résistance à la déchirure ultérieure du film composite (1) est supérieure à 50 N/mm, de préférence comprise entre 50 N/mm et 500 N/mm, plus préférablement entre 100 N/mm et 300 N/mm.

13. Film composite selon l'une des revendications précédentes, **caractérisé en ce qu'**au moins une couche de renforcement (11) est disposée entre la couche fonctionnelle (2) et la couche de protection extérieure (3) et/ou la couche de protection intérieure (4), la couche de renforcement (11) étant réalisée sous la forme d'un tissu de gaze, en particulier la couche de renforcement (11) présentant et/ou étant constituée d'une matière plastique et/ou d'une résine synthétique, de préférence d'un polymère synthétique, en particulier de polypropylène (PP) et/ou de polyéthylène téréphtalate (PET).

14. Film composite selon l'une des revendications précédentes, **caractérisée en ce que** sur la face supérieure (12) et/ou la face inférieure (13) du film composite (1) est prévue au moins une zone de collage (14) côté bord longitudinal, en particulier la zone de collage (14) côté bord longitudinal étant espacée du bord longitudinal (15) du film composite (1) et/ou la zone de collage (14) étant réalisée en forme de bande, éventuellement sous forme de bandes interrompues, et/ou la zone de collage (14) présentant une largeur comprise entre 2 et 10 cm.

15. Film composite selon l'une quelconque des revendications précédentes, **caractérisé en ce que** la couche de protection extérieure (3) et/ou la couche de protection intérieure (4) comprend au moins une fibre bicomposante (5) ayant un premier composant (6) et un second composant (7), le premier composant (6) comprenant un premier polymère et le second composant (7) comprenant un second polymère en tant que composant.
